(19) Europäisches Patentamt / European Patent Office / Office européen des brevets

(11) **EP 4 642 110 A1**

(12) **EUROPEAN PATENT APPLICATION**
published in accordance with Art. 153(4) EPC

(43) Date of publication:
**29.10.2025 Bulletin 2025/44**

(21) Application number: **23907890.0**

(22) Date of filing: **22.12.2023**

(51) International Patent Classification (IPC):
$H04W\ 52/38^{(2009.01)}$    $H04W\ 52/32^{(2009.01)}$
$H04L\ 5/00^{(2006.01)}$    $H04L\ 1/18^{(2023.01)}$
$H04W\ 72/25^{(2023.01)}$    $H04W\ 92/18^{(2009.01)}$
$H04W\ 52/36^{(2009.01)}$    $H04W\ 72/04^{(2023.01)}$

(52) Cooperative Patent Classification (CPC):
H04L 1/18; H04L 5/00; H04W 52/32; H04W 52/36;
H04W 52/38; H04W 72/04; H04W 72/25;
H04W 92/18

(86) International application number:
**PCT/KR2023/021487**

(87) International publication number:
**WO 2024/136607 (27.06.2024 Gazette 2024/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 22.12.2022  KR 20220181992
27.10.2023  KR 20230145941
22.11.2023  KR 20230163466

(71) Applicant: **LG Electronics Inc.**
**Yeongdeungpo-gu**
**Seoul 07336 (KR)**

(72) Inventors:
• **HWANG, Daesung**
**Seoul 06772 (KR)**
• **LEE, Seungmin**
**Seoul 06772 (KR)**

(74) Representative: **Plasseraud IP**
**104 Rue de Richelieu**
**CS92104**
**75080 Paris Cedex 02 (FR)**

(54) **TRANSMISSION POWER CONTROL METHOD AND DEVICE FOR NR SIDELINK TRANSMISSION IN UNLICENSED BAND**

(57)  Proposed is an operating method of a first device (100) in a wireless communication system. The method may comprise the steps of: on a shared spectrum, on the basis that the sum of powers for performing one or more PSFCH transmissions is greater than the maximum transmission power of the first device, determining N PSFCH transmissions to be transmitted from among the one or more PSFCH transmissions, wherein transmission power of transmission on at least one first PRB in a first interlace is considered in the total transmission power associated with a plurality of PSFCH transmissions, which are considered in the determination of the N PSFCH transmissions; and performing the N PSFCH transmissions.

FIG. 17

determining N PSFCHs to transmit, on a shared spectrum, among at least one PSFCH transmission, based on a sum of power for performing the at least one PSFCH transmission being greater than a maximum transmit power of a first device — S1710

performing N PSFCH transmissions — S1720

**Description**

**TECHNICAL FIELD**

This disclosure relates to a wireless communication system.

**BACKGROUND**

Sidelink (SL) communication is a communication scheme in which a direct link is established between User Equipments (UEs) and the UEs exchange voice and data directly with each other without intervention of an evolved Node B (eNB). SL communication is under consideration as a solution to the overhead of an eNB caused by rapidly increasing data traffic. Vehicle-to-everything (V2X) refers to a communication technology through which a vehicle exchanges information with another vehicle, a pedestrian, an entity having an infrastructure (or infra) established therein, and so on. The V2X may be spread into 4 types, such as vehicle-to-vehicle (V2V), vehicle-to-infrastructure (V2I), vehicle-to-network (V2N), and vehicle-to-pedestrian (V2P). The V2X communication may be provided via a PC5 interface and/or Uu interface.

Meanwhile, as a wider range of communication devices require larger communication capacities, the need for mobile broadband communication that is more enhanced than the existing Radio Access Technology (RAT) is rising. Accordingly, discussions are made on services and user equipment (UE) that are sensitive to reliability and latency. And, a next generation radio access technology that is based on the enhanced mobile broadband communication, massive Machine Type Communication (MTC), Ultra-Reliable and Low Latency Communication (URLLC), and so on, may be referred to as a new radio access technology (RAT) or new radio (NR).

**DISCLOSURE**

**TECHNICAL SOLUTION**

According to an embodiment of the present disclosure, a method for performing, by a first device, wireless communication may be proposed. For example, the method may comprise: determining N physical sidelink feedback channels (PSFCHs) to transmit, on a shared spectrum, among at least one PSFCH transmission, based on a sum of power for performing the at least one PSFCH transmission being greater than a maximum transmit power of the first device, wherein the N may be an integer that satisfies $N_1 \le N \le N_{MAX}$, the $N_1$ may be a number of a plurality of PSFCH transmissions with priority values less than or equal to a first priority value, and the $N_{MAX}$ may be a maximum number of PSFCH transmissions of the first device, wherein the first priority value may be a largest priority value such that a total transmit power related to the plurality of PSFCH transmissions does not exceed the maximum transmit power, and wherein the total transmit power may include transmit power of a transmission on at least one first physical resource block (PRB), which is determined based on the plurality of PSFCH transmissions, within a first interlace and transmit power of a transmission on at least one second PRB, on which the plurality of PSFCH transmissions are performed, within a second interlace; and performing the N PSFCH transmissions.

According to an embodiment of the present disclosure, a first device for performing wireless communication may be proposed. For example, the first device may comprise: at least one transceiver; at least one processor; and at least one memory operably connected to the at least one processor and storing instructions that, based on being executed by the at least one processor, cause the first device to perform operations. For example, the operations may comprise: determining N physical sidelink feedback channels (PSFCHs) to transmit, on a shared spectrum, among at least one PSFCH transmission, based on a sum of power for performing the at least one PSFCH transmission being greater than a maximum transmit power of the first device, wherein the N may be an integer that satisfies $N_1 \le N \le N_{MAX}$, the $N_1$ may be a number of a plurality of PSFCH transmissions with priority values less than or equal to a first priority value, and the $N_{MAX}$ may be a maximum number of PSFCH transmissions of the first device, wherein the first priority value may be a largest priority value such that a total transmit power related to the plurality of PSFCH transmissions does not exceed the maximum transmit power, and wherein the total transmit power may include transmit power of a transmission on at least one first physical resource block (PRB), which is determined based on the plurality of PSFCH transmissions, within a first interlace and transmit power of a transmission on at least one second PRB, on which the plurality of PSFCH transmissions are performed, within a second interlace; and performing the N PSFCH transmissions.

According to an embodiment of the present disclosure, a device adapted to control a first user equipment (UE) may be proposed. For example, the device may comprise: at least one processor; and at least one memory operably connected to the at least one processor and storing instructions that, based on being executed by the at least one processor, cause the first UE to perform operations. For example, the operations may comprise: determining N physical sidelink feedback channels (PSFCHs) to transmit, on a shared spectrum, among at least one PSFCH transmission, based on a sum of power for performing the at least one PSFCH transmission being greater than a maximum transmit power of the first UE, wherein the N may be an integer that satisfies $N_1 \leq N \leq N_{MAX}$, the $N_1$ may be a number of a plurality of PSFCH transmissions with priority values less than or equal to a first priority value, and the $N_{MAX}$ may be a maximum number of PSFCH transmissions of the first UE, wherein the first priority value may be a largest priority value such that a total transmit power related to the plurality of PSFCH transmissions does not exceed the maximum transmit power, and wherein the total transmit power may include transmit power of a transmission on at least one first physical resource block (PRB), which is determined based on the plurality of PSFCH transmissions, within a first interlace and transmit power of a transmission on at least one second PRB, on which the plurality of PSFCH transmissions are performed, within a second interlace; and performing the N PSFCH transmissions.

According to an embodiment of the present disclosure, a non-transitory computer-readable storage medium storing instructions may be proposed. For example, the instructions, based on being executed, may cause a first device to: determine N physical sidelink feedback channels (PSFCHs) to transmit, on a shared spectrum, among at least one PSFCH transmission, based on a sum of power for performing the at least one PSFCH transmission being greater than a maximum transmit power of the first device, wherein the N may be an integer that satisfies $N_1 \leq N \leq N_{MAX}$, the $N_1$ may be a number of a plurality of PSFCH transmissions with priority values less than or equal to a first priority value, and the $N_{MAX}$ may be a maximum number of PSFCH transmissions of the first device, wherein the first priority value may be a largest priority value such that a total transmit power related to the plurality of PSFCH transmissions does not exceed the maximum transmit power, and wherein the total transmit power may include transmit power of a transmission on at least one first physical resource block (PRB), which is determined based on the plurality of PSFCH transmissions, within a first interlace and transmit power of a transmission on at least one second PRB, on which the plurality of PSFCH transmissions are performed, within a second interlace; and perform the N PSFCH transmissions.

According to an embodiment of the present disclosure, a method for performing, by a second device, wireless communication may be proposed. For example, the method may comprise: performing channel sensing related to a channel access procedure (CAP) for a first resource, on a shared spectrum; performing a physical sidelink shared channel (PSSCH) transmission to a first device based on the first resource, based on a result of the channel sensing being IDLE; and receiving a first physical sidelink feedback channel (PSFCH) transmission related to the PSSCH transmission based on a PSFCH resource, wherein the first PSFCH transmission may be included in N PSFCH transmissions, wherein the N PSFCH transmissions may be determined among at least one PSFCH transmission, based on a sum of power for performing the at least one PSFCH transmission being greater than a maximum transmit power of the first device, wherein the N may be an integer that satisfies $N_1 \leq N \leq N_{MAX}$, the $N_1$ may be a number of a plurality of PSFCH transmissions with priority values less than or equal to a first priority value, and the $N_{MAX}$ may be a maximum number of PSFCH transmissions of the first device, wherein the first priority value may be a largest priority value such that a total transmit power related to the plurality of PSFCH transmissions does not exceed the maximum transmit power, and wherein the total transmit power may include transmit power of a transmission on at least one first physical resource block (PRB), which is determined based on the plurality of PSFCH transmissions, within a first interlace and transmit power of a transmission on at least one second PRB, on which the plurality of PSFCH transmissions are performed, within a second interlace.

According to an embodiment of the present disclosure, a second device for performing wireless communication may be proposed. For example, the second device may comprise: at least one transceiver; at least one processor; and at least one memory operably connected to the at least one processor and storing instructions that, based on being executed by the at least one processor, cause the second device to perform operations. For example, the operations may comprise: performing channel sensing related to a channel access procedure (CAP) for a first resource, on a shared spectrum; performing a physical sidelink shared channel (PSSCH) transmission to a first device based on the first resource, based on a result of the channel sensing being IDLE; and receiving a first physical sidelink feedback channel (PSFCH) transmission related to the PSSCH transmission based on a PSFCH resource, wherein the first PSFCH transmission may be included in N PSFCH transmissions, wherein the N PSFCH transmissions may be determined among at least one PSFCH transmission, based on a sum of power for performing the at least one PSFCH transmission being greater than a maximum transmit power of the first device, wherein the N may be an integer that satisfies $N_1 \leq N \leq N_{MAX}$, the $N_1$ may be a number of a plurality of PSFCH transmissions with priority values less than or equal to a first priority value, and the $N_{MAX}$ may be a maximum number of PSFCH transmissions of the first device, wherein the first priority value may be a largest priority value such that a total transmit power related to the plurality of PSFCH transmissions does not exceed the maximum transmit power, and wherein the total transmit power may include transmit power of a transmission on at least one first physical resource block (PRB), which is determined based on the plurality of PSFCH transmissions, within a first interlace and transmit power of a transmission on at least one second PRB, on which the plurality of PSFCH transmissions are performed, within a second interlace.

## BRIEF DESCRIPTION OF THE DRAWINGS

FIG. 1 shows a communication structure that can be provided in a 6G system, according to one embodiment of the present disclosure.

FIG. 2 shows an electromagnetic spectrum, according to one embodiment of the present disclosure.

FIG. 3 shows a structure of an NR system, based on an embodiment of the present disclosure.

FIG. 4 shows a radio protocol architecture, based on an embodiment of the present disclosure.

FIG. 5 shows a structure of a radio frame of an NR, based on an embodiment of the present disclosure.

FIG. 6 shows a structure of a slot of an NR frame, based on an embodiment of the present disclosure.

FIG. 7 shows an example of a BWP, based on an embodiment of the present disclosure.

FIG. 8 shows a procedure of performing V2X or SL communication by a UE based on a transmission mode, based on an embodiment of the present disclosure.

FIG. 9 shows three cast types, based on an embodiment of the present disclosure.

FIG. 10 shows an example of a wireless communication system supporting an unlicensed band, based on an embodiment of the present disclosure.

FIG. 11 shows a method of occupying resources in an unlicensed band, based on an embodiment of the present disclosure.

FIG. 12 shows a case in which a plurality of LBT-SBs are included in an unlicensed band, based on an embodiment of the present disclosure.

FIG. 13 shows CAP operations performed by a base station to transmit a downlink signal through an unlicensed band, based on an embodiment of the present disclosure.

FIG. 14 shows type 1 CAP operations performed by a UE to transmit an uplink signal, based on an embodiment of the present disclosure.

FIG. 15 shows the range of excluding common PRBs to satisfy channel occupancy requirements, according to one embodiment of the present disclosure.

FIG. 16 shows a procedure for determining at least one dedicated PRB on which a PSFCH transmission is to be performed, considering the transmit power on a common PRB, according to one embodiment of the present disclosure.

FIG. 17 shows a procedure for a first device to perform wireless communication, according to one embodiment of the present disclosure.

FIG. 18 shows a procedure for a second device to perform wireless communication, according to one embodiment of the present disclosure.

FIG. 19 shows a communication system 1, based on an embodiment of the present disclosure.

FIG. 20 shows wireless devices, based on an embodiment of the present disclosure.

FIG. 21 shows a signal process circuit for a transmission signal, based on an embodiment of the present disclosure.

FIG. 22 shows another example of a wireless device, based on an embodiment of the present disclosure.

FIG. 23 shows a hand-held device, based on an embodiment of the present disclosure.

FIG. 24 shows a vehicle or an autonomous vehicle, based on an embodiment of the present disclosure.

## MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of" may be replaced with 'based on'.

A technical feature described individually in one figure in the present disclosure may be individually implemented, or may be simultaneously implemented.

In the present disclosure, a higher layer parameter may be a parameter which is configured, pre-configured or predefined for a UE. For example, a base station or a network may transmit the higher layer parameter to the UE. For example, the higher layer parameter may be transmitted through radio resource control (RRC) signaling or medium access control (MAC) signaling.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

5G NR is a successive technology of LTE-A corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

The 6G (wireless communication) system is aimed at (i) very high data rates per device, (ii) a very large number of connected devices, (iii) global connectivity, (iv) very low latency, (v) lower energy consumption for battery-free IoT devices, (vi) ultra-reliable connectivity, and (vii) connected intelligence with a machine learning capability. The vision of the 6G system can be in four aspects: intelligent connectivity, deep connectivity, holographic connectivity, and ubiquitous connectivity, and the 6G system may satisfy the requirements as shown in Table 1 below. In other words, Table 1 is an example of the requirements of the 6G system.

[Table 1]

| Per device peak data rate | 1 Tbps |
|---|---|
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

6G system may have key factors such as eMBB(Enhanced mobile broadband), URLLC(Ultra-reliable low latency communications), mMTC(massive machine-type communication), AI integrated communication, Tactile internet, High throughput, High network capacity, High energy efficiency, Low backhaul and access network congestion, Enhanced data security.

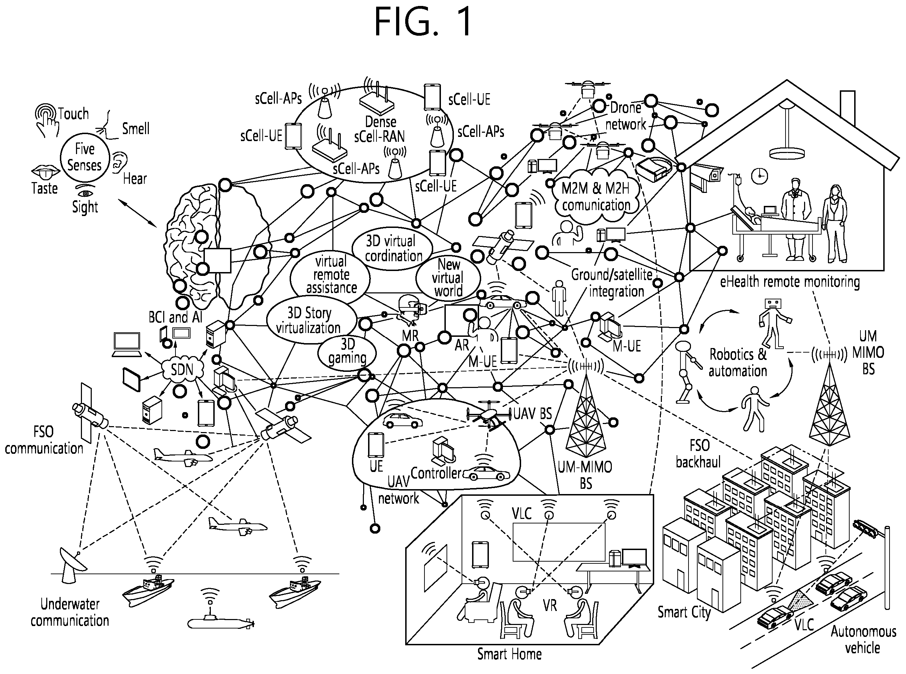

FIG. 1 shows a communication structure that can be provided in a 6G system, according to one embodiment of the present disclosure. The embodiment of FIG. 1 may be combined with various embodiments of the present disclosure.

6G systems are expected to have 50 times higher simultaneous radio connectivity than 5G radio systems. URLLC, a key feature of 5G, will become a more dominant technology in 6G communications by providing end-to-end delay of less than 1 ms. In 6G systems, volumetric spectral efficiency will be much better, as opposed to the area spectral efficiency often used today. 6G systems will be able to offer very long battery life and advanced battery technologies for energy harvesting, so mobile devices will not need to be recharged separately in 6G systems. In 6G, new network characteristics may be as follows.

- Satellites integrated network: To provide a global mobile population, 6G is expected to be integrated with satellite. The integration of terrestrial, satellite, and airborne networks into a single wireless communication system is important for 6G.

- Connected intelligence: Unlike previous generations of wireless communication systems, 6G is revolutionary and the wireless evolution will be updated from "connected things" to "connected intelligence". AI can be applied at each step of the communication procedure (or each step of signal processing, as will be described later).
- Seamless integration wireless information and energy transfer: 6G wireless networks will deliver power to charge batteries of devices such as smartphones and sensors. Therefore, wireless information and energy transfer (WIET) will be integrated.
- Ubiquitous super 3D connectivity: Super 3D connection will be generated from 6G ubiquity to access networks and core network functions on drones and very low Earth orbit satellites.

Given the above new network characteristics of 6G, some common requirements may be as follows

- small cell networks: The idea of small cell networks was introduced in cellular systems to improve received signal quality as a result of improved processing throughput, energy efficiency, and spectral efficiency. As a result, small cell networks are an essential characteristic for communication systems over 5G and beyond 5G (5GB). Therefore, 6G communication systems will also adopt the characteristics of small cell networks.
- Ultra-dense heterogeneous network: Ultra-dense heterogeneous networks will be another important characteristic of 6G communication systems. Multi-tier networks composed of heterogeneous networks will improve overall QoS and reduce costs.
- High-capacity backhaul: Backhaul connection is characterized by high-capacity backhaul networks to support large volumes of traffic. High-speed fiber optics and free-space optics (FSO) systems may be a possible solution to this problem.
- Radar technology integrated with mobile technology: High-precision localization (or location-based services) through communication is one of the features of 6G wireless communication systems. Therefore, radar systems will be integrated with 6G networks.
- Softwarization and virtualization: Softwareization and virtualization are two important features that are fundamental to the design process in a 5GB network to ensure flexibility, reconfigurability, and programmability. In addition, billions of devices may be shared on a shared physical infrastructure.

The following describes the core implementation technologies for 6G systems.

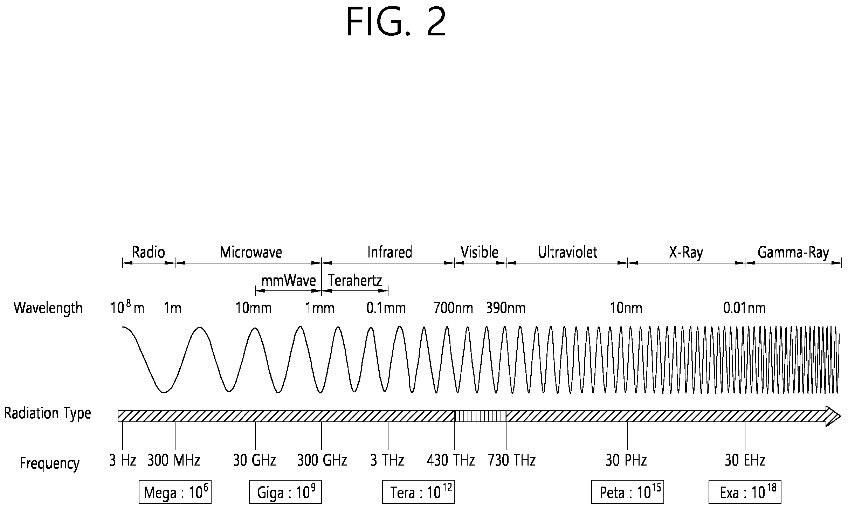

- Artificial Intelligence: The most important and new technology that will be introduced in the 6G system is AI. The 4G system did not involve AI. 5G systems will support partial or very limited AI. However, 6G systems will be fully AI-enabled for automation. Advances in machine learning will create more intelligent networks for real-time communication in 6G. The introduction of AI in telecommunications may streamline and improve real-time data transmission. AI may use numerous analytics to determine the way complex target operations are performed, which means AI can increase efficiency and reduce processing delays. Time-consuming tasks such as handover, network selection, and resource scheduling can be done instantly by using AI. AI may also play an important role in M2M, machine-to-human, and human-to-machine communications. In addition, AI may become a rapid communication in Brain Computer Interface (BCI). AI-based communication systems can be supported by metamaterials, intelligent structures, intelligent networks, intelligent devices, intelligent cognitive radios, self-sustaining wireless networks, and machine learning.
- THz Communication (Terahertz Communication): Data rates can be increased by increasing bandwidth. This can be accomplished by using sub-THz communication with a wide bandwidth and applying advanced massive MIMO technology. THz waves, also known as sub-millimeter radiation, refer to frequency bands between 0.1 and 10 THz with corresponding wavelengths typically ranging from 0.03 mm-3 mm. The 100 GHz-300 GHz band range (Sub THz band) is considered the main part of the THz band for cellular communications. Adding the Sub-THz band to the mmWave band increases the capacity of 6G cellular communications. 300 GHz-3 THz in the defined THz band is in the far infrared (IR) frequency band. The 300 GHz-3 THz band is part of the optical band, but it is on the border of the optical band, just behind the RF band. Thus, the 300 GHz-3 THz band exhibits similarities to RF. FIG. 2 shows an electromagnetic spectrum, according to one embodiment of the present disclosure. The embodiment of FIG. 2 may be combined with various embodiments of the present disclosure. Key characteristics of THz communications include (i) widely available bandwidth to support very high data rates, and (ii) high path loss at high frequencies (for which highly directive antennas are indispensable). The narrow beamwidth produced by highly directive antennas reduces interference. The small wavelength of THz signals allows a much larger number of antenna elements to be integrated into devices and BSs operating in this band. This enables the use of advanced adaptive array techniques that can overcome range limitations.
- Large-scale MIMO
- HBF, Hologram Bmeaforming

- Optical wireless technology
- FSO Backhaul Network
- Non-Terrestrial Networks, NTN
- Quantum Communication
- Cell-free Communication
- Integration of Wireless Information and Power Transmission
- Integration of Wireless Communication and Sensing
- Integrated Access and Backhaul Network
- Big data Analysis
- Reconfigurable Intelligent Surface
- Metaverse
- Block-chain
- UAV, Unmanned Aerial Vehicle: Unmanned aerial vehicles (UAVs), or drones, will be an important component of 6G wireless communications. In most cases, high-speed data wireless connection is provided using UAV technology. A BS entity is installed on a UAV to provide cellular connection. UAVs have specific features not found in fixed BS infrastructure, such as easy deployment, strong line-of-sight links, and freedom of controlled mobility. During emergencies, such as natural disasters, the deployment of terrestrial communication infrastructure is not economically feasible and sometimes cannot provide services in volatile environments. UAVs can easily handle these situations. UAVs will be a new paradigm in wireless communications. This technology facilitates three basic requirements of wireless networks: eMBB, URLLC, and mMTC. UAVs can also support many other purposes such as enhancing network connectivity, fire detection, disaster emergency services, security and surveillance, pollution monitoring, parking monitoring, accident monitoring, etc. Therefore, UAV technology is recognized as one of the most important technologies for 6G communications.
- Autonomous Driving, Self-driving: For perfect autonomous driving, vehicles must communicate with each other to inform each other of dangerous situations, or with infrastructure such as parking lots and traffic lights to check information such as the location of parking information and signal change times. Vehicle to Everything (V2X), a key element in building an autonomous driving infrastructure, is a technology that allows vehicles to communicate and share information with various elements on the road, in order to perform autonomous driving, such as vehicle-to-vehicle (V2V) wireless communication and vehicle-to-infrastructure (V2I) wireless communication. In order to maximize the performance of autonomous driving and ensure high safety, fast transmission speeds and low latency technologies are essential. In addition, in the future, autonomous driving will go beyond delivering warnings or guidance messages to a driver to actively intervene in vehicle operation and directly control the vehicle in dangerous situations, so the amount of information that needs to be transmitted and received will be vast, and 6G is expected to maximize autonomous driving with faster transmission speeds and lower latency than 5G.

For the sake of clarity, the description focuses on 5G NR, but the technical ideas of one embodiment of the present disclosure are not limited thereto. Various embodiments of the present disclosure may also be applicable to 6G communication systems.

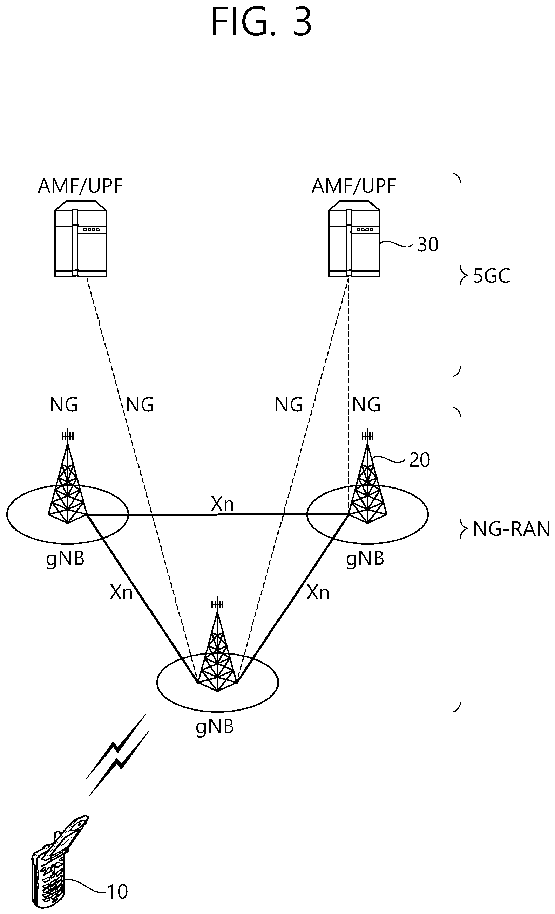

FIG. 3 shows a structure of an NR system, based on an embodiment of the present disclosure. The embodiment of FIG. 3 may be combined with various embodiments of the present disclosure.

Referring to FIG. 3, a next generation-radio access network (NG-RAN) may include a BS 20 providing a UE 10 with a user plane and control plane protocol termination. For example, the BS 20 may include a next generation-Node B (gNB) and/or an evolved-NodeB (eNB). For example, the UE 10 may be fixed or mobile and may be referred to as other terms, such as a mobile station (MS), a user terminal (UT), a subscriber station (SS), a mobile terminal (MT), wireless device, and so on. For example, the BS may be referred to as a fixed station which communicates with the UE 10 and may be referred to as other terms, such as a base transceiver system (BTS), an access point (AP), and so on.

The embodiment of FIG. 3 exemplifies a case where only the gNB is included. The BSs 20 may be connected to one another via Xn interface. The BS 20 may be connected to one another via 5th generation (5G) core network (5GC) and NG interface. More specifically, the BSs 20 may be connected to an access and mobility management function (AMF) 30 via NG-C interface, and may be connected to a user plane function (UPF) 30 via NG-U interface.

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

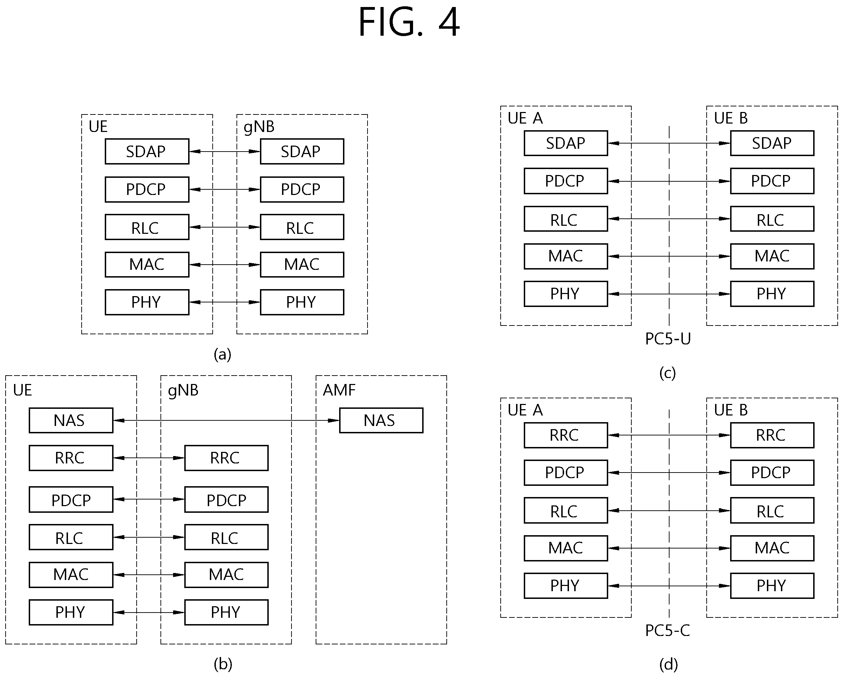

FIG. 4 shows a radio protocol architecture, based on an embodiment of the present disclosure. The embodiment of FIG. 4 may be combined with various embodiments of the present disclosure. Specifically, (a) of FIG. 4 shows a radio protocol stack of a user plane for Uu communication, and (b) of FIG. 4 shows a radio protocol stack of a control plane for Uu communication. (c) of FIG. 4 shows a radio protocol stack of a user plane for SL communication, and (d) of FIG. 4 shows a radio protocol stack of a control plane for SL communication.

Referring to FIG. 4, a physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

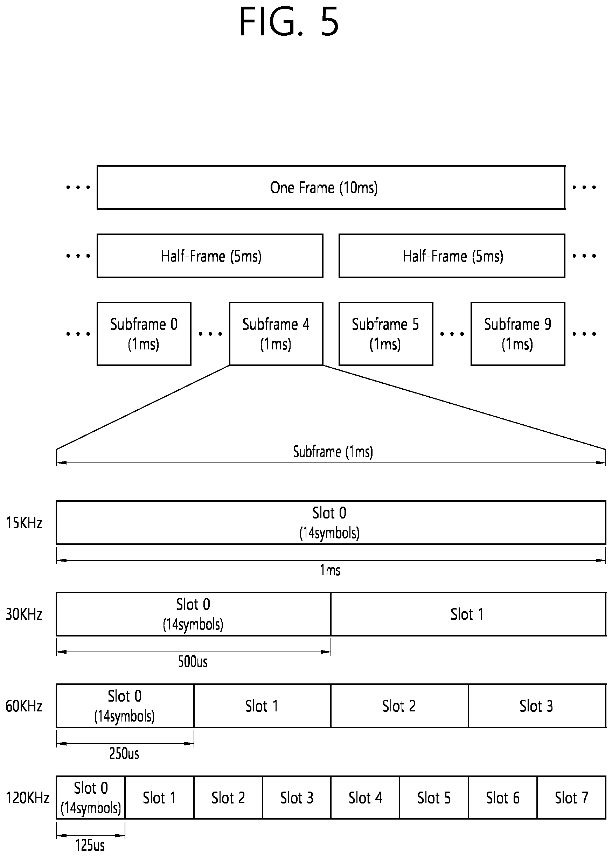

FIG. 5 shows a structure of a radio frame of an NR, based on an embodiment of the present disclosure. The embodiment of FIG. 5 may be combined with various embodiments of the present disclosure.

Referring to FIG. 5, in the NR, a radio frame may be used for performing uplink and downlink transmission. A radio frame has a length of 10ms and may be defined to be configured of two half-frames (HFs). A half-frame may include five 1ms subframes (SFs). A subframe (SF) may be spread into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

The following Table 2 shows the number of symbols per slot ($N^{slot}_{symb}$), number of slots per frame ($N^{frame,u}_{slot}$), and number of slots per subframe ($N^{subframe,u}_{slot}$), depending on the SCS configuration (u), when Normal CP or Extended CP is used.

[Table 2]

| CP type | SCS (15*2$^u$) | $N^{slot}_{symb}$ | $N^{frame,u}_{slot}$ | $N^{subframe,u}_{slot}$ |
|---|---|---|---|---|
| normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| extended CP | 60kHz (u=2) | 12 | 40 | 4 |

In an NR system, OFDM(A) numerologies (e.g., SCS, CP length, and so on) between multiple cells being integrate to one UE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells.

In the NR, multiple numerologies or SCSs for supporting diverse 5G services may be supported. For example, in case an SCS is 15kHz, a wide area of the conventional cellular bands may be supported, and, in case an SCS is 30kHz/60kHz a denseurban, lower latency, wider carrier bandwidth may be supported. In case the SCS is 60kHz or higher, a bandwidth that is greater than 24.25GHz may be used in order to overcome phase noise.

An NR frequency band may be defined as two different types of frequency ranges. The two different types of frequency ranges may be FR1 and FR2. The values of the frequency ranges may be changed (or varied), and, for example, the two different types of frequency ranges may be as shown below in Table 3. Among the frequency ranges that are used in an NR system, FR1 may mean a "sub 6GHz range", and FR2 may mean an "above 6GHz range" and may also be referred to as a millimeter wave (mmW).

[Table 3]

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed (or varied). For example, as shown below in Table 4, FR1 may include a band within a range of 410MHz to 7125MHz. More specifically, FR1 may include a frequency band of 6GHz (or 5850, 5900, 5925 MHz, and so on) and higher. For example, a frequency band of 6GHz (or 5850, 5900, 5925 MHz, and so on) and higher being included in FR1 mat include an unlicensed band. The unlicensed band may be used for diverse purposes, e.g., the unlicensed band for vehicle-specific communication (e.g., automated driving).

[Table 4]

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

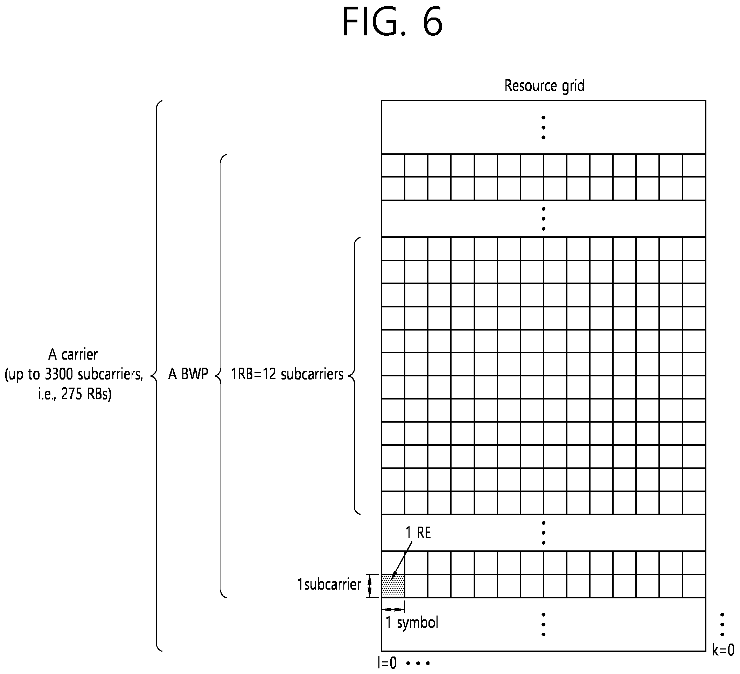

FIG. 6 shows a structure of a slot of an NR frame, based on an embodiment of the present disclosure. The embodiment of FIG. 6 may be combined with various embodiments of the present disclosure.

Referring to FIG. 6, a slot includes a plurality of symbols in a time domain. For example, in case of a normal CP, one slot may include 14 symbols. However, in case of an extended CP, one slot may include 12 symbols. Alternatively, in case of a normal CP, one slot may include 7 symbols. However, in case of an extended CP, one slot may include 6 symbols. A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on).

A carrier may include a maximum of N number BWPs (e.g., 5 BWPs). Data communication may be performed via an activated BWP. Each element may be referred to as a Resource Element (RE) within a resource grid and one complex symbol may be mapped to each element.

Hereinafter, a bandwidth part (BWP) and a carrier will be described.

The BWP may be a set of consecutive physical resource blocks (PRBs) in a given numerology. The PRB may be selected from consecutive sub-sets of common resource blocks (CRBs) for the given numerology on a given carrier

For example, the BWP may be at least any one of an active BWP, an initial BWP, and/or a default BWP. For example, the UE may not monitor downlink radio link quality in a DL BWP other than an active DL BWP on a primary cell (PCell). For example, the UE may not receive PDCCH, physical downlink shared channel (PDSCH), or channel state information - reference signal (CSI-RS) (excluding RRM) outside the active DL BWP. For example, the UE may not trigger a channel state information (CSI) report for the inactive DL BWP. For example, the UE may not transmit physical uplink control channel (PUCCH) or physical uplink shared channel (PUSCH) outside an active UL BWP. For example, in a downlink case, the initial BWP may be given as a consecutive RB set for a remaining minimum system information (RMSI) control resource set (CORESET) (configured by physical broadcast channel (PBCH)). For example, in an uplink case, the initial BWP may be given by system information block (SIB) for a random access procedure. For example, the default BWP may be configured by a higher layer. For example, an initial value of the default BWP may be an initial DL BWP. For energy saving, if the UE fails to detect downlink control information (DCI) during a specific period, the UE may switch the active BWP of the UE to the default BWP.

Meanwhile, the BWP may be defined for SL. The same SL BWP may be used in transmission and reception. For example, a transmitting UE may transmit an SL channel or an SL signal on a specific BWP, and a receiving UE may receive the SL channel or the SL signal on the specific BWP. In a licensed carrier, the SL BWP may be defined separately from a Uu BWP, and the SL BWP may have configuration signaling separate from the Uu BWP. For example, the UE may receive a configuration for the SL BWP from the BS/network. For example, the UE may receive a configuration for the Uu BWP from the BS/network. The SL BWP may be (pre-)configured in a carrier with respect to an out-of-coverage NR V2X UE and an RRC_IDLE UE. For the UE in the RRC_CONNECTED mode, at least one SL BWP may be activated in the carrier.

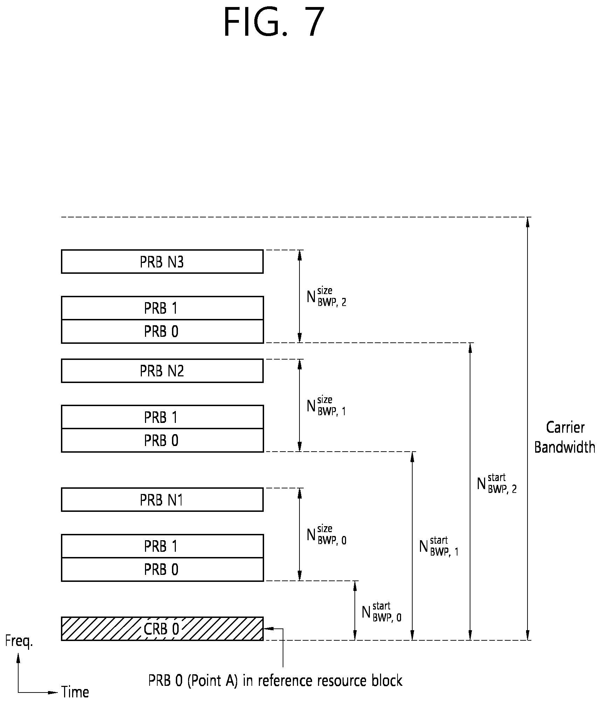

FIG. 7 shows an example of a BWP, based on an embodiment of the present disclosure. The embodiment of FIG. 7 may be combined with various embodiments of the present disclosure. It is assumed in the embodiment of FIG. 7 that the number of BWPs is 3.

Referring to FIG. 7, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset $N^{start}_{BWP}$ from the point A, and a bandwidth $N^{size}_{BWP}$. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

Hereinafter, V2X or SL communication will be described.

A sidelink synchronization signal (SLSS) may include a primary sidelink synchronization signal (PSSS) and a secondary sidelink synchronization signal (SSSS), as an SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

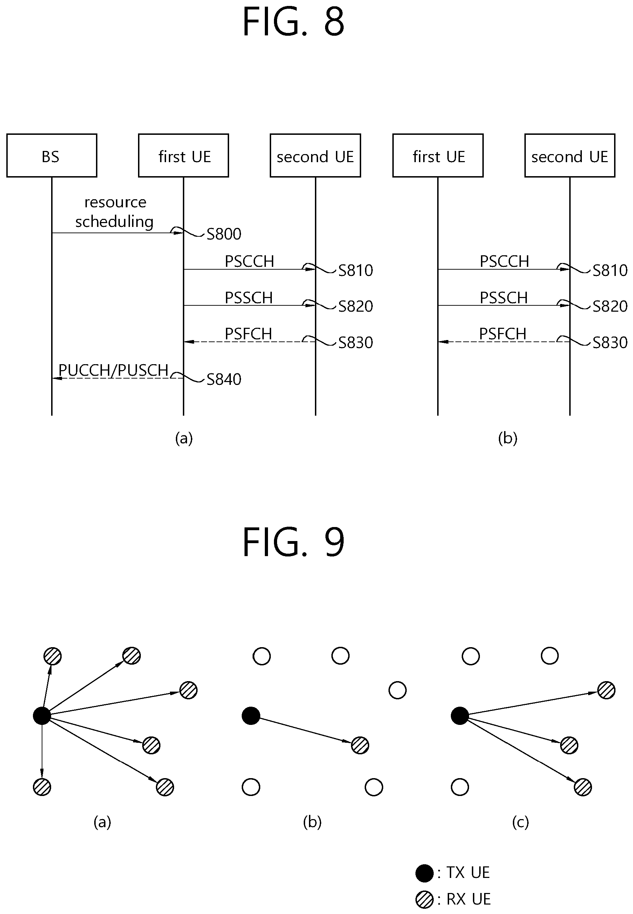

FIG. 8 shows a procedure of performing V2X or SL communication by a UE based on a transmission mode, based on an embodiment of the present disclosure. The embodiment of FIG. 8 may be combined with various embodiments of the present disclosure. In various embodiments of the present disclosure, the transmission mode may be called a mode or a resource allocation mode. Hereinafter, for convenience of explanation, in LTE, the transmission mode may be called an LTE transmission mode. In NR, the transmission mode may be called an NR resource allocation mode.

For example, (a) of FIG. 8 shows a UE operation related to an LTE transmission mode 1 or an LTE transmission mode 3. Alternatively, for example, (a) of FIG. 8 shows a UE operation related to an NR resource allocation mode 1. For example, the LTE transmission mode 1 may be applied to general SL communication, and the LTE transmission mode 3 may be applied to V2X communication.

For example, (b) of FIG. 8 shows a UE operation related to an LTE transmission mode 2 or an LTE transmission mode 4. Alternatively, for example, (b) of FIG. 8 shows a UE operation related to an NR resource allocation mode 2.

Referring to (a) of FIG. 8, in the LTE transmission mode 1, the LTE transmission mode 3, or the NR resource allocation mode 1, a base station may schedule SL resource(s) to be used by a UE for SL transmission. For example, in step S800, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S810, the first UE may transmit a PSCCH (e.g., sidelink control information (SCI) or 1st-stage SCI) to a second UE based on the resource scheduling. In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE. For example, HARQ feedback information (e.g., NACK information or ACK information) may be received from the second UE through the PSFCH. In step S840, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling. For example, a format of the DCI may be a DCI format 3_0 or a DCI format 3_1.

Referring to (b) of FIG. 8, in the LTE transmission mode 2, the LTE transmission mode 4, or the NR resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S810, a first UE which has selected resource(s) from a resource pool by itself may transmit a PSCCH (e.g., sidelink control information (SCI) or 1 st-stage SCI) to a second UE by using the resource(s). In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE.

Referring to (a) or (b) of FIG. 8, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1st SCI, a first SCI, a 1st-stage SCI or a 1 st-stage SCI format, and a SCI transmitted through a PSSCH may be referred to as a 2nd SCI, a second SCI, a 2nd-stage SCI or a 2nd-stage SCI format. For example, the 1st-stage SCI format may include a SCI format 1-A, and the 2nd-stage SCI format may include a SCI format 2-A and/or a SCI format 2-B.

Hereinafter, an example of SCI format 1-A will be described.

SCI format 1-A is used for the scheduling of PSSCH and 2nd-stage-SCI on PSSCH.

The following information is transmitted by means of the SCI format 1-A:

- Priority - 3 bits
- Frequency resource assignment - ceiling $(\log_2(N^{SL}_{subChannel}(N^{SL}_{subChannel}+1)/2))$ bits when the value of the higher layer parameter sl-MaxNumPerReserve is configured to 2; otherwise ceiling $\log_2(N^{SL}_{subChannel}(N^{SL}_{subChannel}+1)$ $(2N^{SL}_{subChannel}+1)/6)$ bits when the value of the higher layer parameter sl-MaxNumPerReserve is configured to 3
- Time resource assignment - 5 bits when the value of the higher layer parameter sl-MaxNumPerReserve is configured to 2; otherwise 9 bits when the value of the higher layer parameter sl-MaxNumPerReserve is configured to 3
- Resource reservation period - ceiling $(\log_2 N_{rsv\_period})$ bits, where $N_{rsv\_period}$ is the number of entries in the higher layer parameter sl-ResourceReservePeriodList, if higher layer parameter sl-MultiReserveResource is configured; 0 bit otherwise
- DMRS pattern - ceiling $(\log_2 N_{pattern})$ bits, where $N_{pattern}$ is the number of DMRS patterns configured by higher layer parameter sl-PSSCH-DMRS-TimePatternList
- 2nd-stage SCI format - 2 bits as defined in Table 5
- Beta_offset indicator - 2 bits as provided by higher layer parameter sl-BetaOffsets2ndSCI
- Number of DMRS port - 1 bit as defined in Table 6
- Modulation and coding scheme - 5 bits
- Additional MCS table indicator - 1 bit if one MCS table is configured by higher layer parameter sl-Additional-MCS-Table; 2 bits if two MCS tables are configured by higher layer parameter sl- Additional-MCS-Table; 0 bit otherwise
- PSFCH overhead indication - 1 bit if higher layer parameter sl-PSFCH-Period = 2 or 4; 0 bit otherwise
- Reserved - a number of bits as determined by higher layer parameter sl-NumReservedBits, with value set to zero.

[Table 5]

| Value of 2nd-stage SCI format field | 2nd-stage SCI format |
|---|---|
| 00 | SCI format 2-A |
| 01 | SCI format 2-B |
| 10 | Reserved |
| 11 | Reserved |

[Table 6]

| Value of the Number of DMRS port field | Antenna ports |
|---|---|
| 0 | 1000 |
| 1 | 1000 and 1001 |

Hereinafter, an example of SCI format 2-A will be described.

SCI format 2-A is used for the decoding of PSSCH, with HARQ operation when HARQ-ACK information includes ACK or NACK, when HARQ-ACK information includes only NACK, or when there is no feedback of HARQ-ACK information.

The following information is transmitted by means of the SCI format 2-A:

- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Cast type indicator - 2 bits as defined in Table 5
- CSI request - 1 bit

[Table 7]

| Value of Cast type indicator | Cast type |
|---|---|
| 00 | Broadcast |
| 01 | Groupcast when HARQ-ACK information includes ACK or NACK |
| 10 | Unicast |
| 11 | Groupcast when HARQ-ACK information includes only NACK |

Hereinafter, an example of SCI format 2-B will be described.

SCI format 2-B is used for the decoding of PSSCH, with HARQ operation when HARQ-ACK information includes only NACK, or when there is no feedback of HARQ-ACK information.

The following information is transmitted by means of the SCI format 2-B:

- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Zone ID - 12 bits
- Communication range requirement - 4 bits determined by higher layer parameter sl-ZoneConfigMCR-Index

Referring to (a) or (b) of FIG. 8, in step S830, the first UE may receive the PSFCH. For example, the first UE and the second UE may determine a PSFCH resource, and the second UE may transmit HARQ feedback to the first UE using the PSFCH resource.

Referring to (a) of FIG. 8, in step S840, the first UE may transmit SL HARQ feedback to the base station through the PUCCH and/or the PUSCH.

FIG. 9 shows three cast types, in accordance with an embodiment of the present disclosure. The embodiment of FIG. 9 may be combined with various embodiments of the present disclosure.

Specifically, FIG. 9(a) shows broadcast-type SL communication, FIG. 9(b) shows unicast type-SL communication, and FIG. 9(c) shows groupcast-type SL communication. In case of the unicast-type SL communication, a UE may perform one-to-one communication with respect to another UE. In case of the groupcast-type SL transmission, the UE may perform SL communication with respect to one or more UEs in a group to which the UE belongs. In various embodiments of the present disclosure, SL groupcast communication may be replaced with SL multicast communication, SL one-to-many communication, or the like.

The following describes a UE procedure to report HARQ-ACK on a sidelink.

A UE may be instructed by SCI format that schedules a reception of PSSCH on one or more subchannels from $N^{PSSCH}_{subch}$ to transmit a PSFCH that includes HARQ-ACK information in response to the reception of a PSSCH. A UE provides HARQ-ACK information including ACK or NACK, or NACK only.

A UE may be provided with the number of slots in a resource pool for PSFCH transmission occasion resources by sl-PSFCH-Period-r16. If the number is zero, PSFCH transmission from a UE is disabled in the resource pool. A UE expects to have a PSFCH transmission occasion resource in slot $t'^{SL}_k$ ($0 \leq k < T'_{max}$) if k mod $N^{PSFCH}_{PSSCH} = 0$, where $t'^{SL}_k$ is a slot in the resource pool, and $T'_{max}$ is the number of slots in the resource pool within 10240 msec, and $N^{PSFCH}_{PSSCH}$ is provided in sl-PSFCH-Period-r16. A UE may be instructed by the upper layer not to transmit a PSFCH in response to the reception of a PSSCH. If a UE receives a PSSCH in the resource pool and the HARQ feedback enabled/disabled indicator field included in the associated SCI format 2-A or SCI format 2-B has a value of 1, the UE provides HARQ-ACK information via PSFCH transmission from in resource pool. A UE transmits the PSFCH in a first slot, wherein the first slot is the slot including a PSFCH resource and after the minimum number of slots provided by sl-MinTimeGapPSFCH-r16 of the resource pool after the last slot of the PSSCH reception.

A UE is provided by sl-PSFCH-RB-Set-r16 with $M^{PSFCH}_{PRB,set}$ of PRBs in a resource pool for PSFCH transmissions on PRBs in the resource pool. For the number of PSSCH slots related to a PSFCH slot that is less than or equal to $N_{subch}$ and $N^{PSFCH}_{PSSCH}$, the number of subchannels for the resource pool provided by sl-NumSubchannel, a UE allocates the PRB $[(i+j-N^{PSFCH}_{PSSCH})-M^{PSFCH}_{subch,slot}, (i+1+j-N^{PSFCH}_{PSSCH})-M^{PSFCH}_{subch,slot}-1]$ among the $M^{PSFCH}_{PRB,set}$ PRB for slot i and subchannel j among the PSSCH slots associated with the PSFCH slot. Here, $M^{PSFCH}_{subch,slot} = M^{PSFCH}_{PRB,set}/ (N_{subch}-N^{PSFCH}_{PSSCH})$, $0 \leq i < N^{PSFCH}_{PSSCH}$, $0 \leq j < N_{subch}$, and the allocations starts in ascending order for i and continues in ascending order for j. A UE expects $M^{PSFCH}_{PRB,set}$ to be a multiple of

$N_{subch} \cdot N^{PSFCH}_{PSSCH}$.

A UE determines the number of available PSFCH resources for multiplexing HARQ-ACK information included in a PSFCH transmission as $R^{PSFCH}_{PRB,CS} = N^{PSFCH}_{type} \cdot M^{PSFCH}_{subch,slot} \cdot N^{PSFCH}_{CS}$. Here, $N^{PSFCH}_{CS}$ may be the number of cyclic shift pairs for the resource pool, and based on an indication by the higher layer,

- $N^{PSFCH}_{type} = 1$, and $M^{PSFCH}_{subch,slot}$ PRB may be related to the starting subchannel of the corresponding PSSCH,
- $N^{PSFCH}_{type} = N^{PSSCH}_{subch}$ and $N^{PSSCH}_{subch} \cdot M^{PSFCH}_{subch,slot}$ PRB is related to one or more subchannels among $N^{PSSCH}_{subch}$ subchannels of the corresponding PSSCH.

A PSFCH resource is indexed first in ascending order of a PRB indexes among $N^{PSFCH}_{type} \cdot M^{PSFCH}_{subch,slot}$ PRBs, after then, it is indexed in ascending order of cyclic shift pair indexes among $N^{PSFCH}_{CS}$ cyclic shift pairs.

A UE determines an index of a PSFCH resource for a PSFCH transmission in response to the PSSCH reception as $(P_{ID} + M_{ID})$ mod $R^{PSFCH}_{PRB,CS}$. Here, $P_{ID}$ is a physical layer source ID provided by SCI format 2-A or 2-B scheduling a PSSCH reception, $M_{ID}$ is an ID of a UE receiving a PSSCH, indicated from the higher layer when a UE detects SCI format 2-A in which a cast type indicator field value is "01", $M_{ID}$ is 0 otherwise.

A UE determines $m_0$ value for calculating a cyclic shift $\alpha$ value from $N^{PSFCH}_{CS}$ and a cyclic shift pair index which corresponds to a PSFCH resource index using Table 8.

[Table 8]

| $N^{PSFCH}_{CS}$ | $m_0$ | | | | | |
|---|---|---|---|---|---|---|
| | Cyclic shift pair index 0 | Cyclic shift pair index 1 | Cyclic shift pair index 2 | Cyclic shift pair index 3 | Cyclic shift pair index 4 | Cyclic shift pair index 5 |
| 1 | 0 | - | - | - | - | - |
| 2 | 0 | 3 | - | - | - | - |
| 3 | 0 | 2 | 4 | - | - | - |
| 6 | 0 | 1 | 2 | 3 | 4 | 5 |

As shown in Table 9, when a UE detects SCI format 2-A with a cast type indicator field value of "01" or "10", or as shown in Table 10, when a UE detects SCI format 2-B or SCI format 2-A with a cast type indicator field value of "11", a UE determines $m_{cs}$ the value for calculating a cyclic shift $\alpha$ value. A UE applies one cyclic shift among cyclic shifts to a sequence used in a PSFCH transmission.

[Table 9]

| HARQ-ACK Value | 0 (NACK) | 1 (ACK) |
|---|---|---|
| Sequence cyclic shift | 0 | 6 |

[Table 10]

| HARQ-ACK Value | 0 (NACK) | 1 (ACK) |
|---|---|---|
| Sequence cyclic shift | 0 | N/A |

Meanwhile, in the conventional unlicensed spectrum (NR-U), a communication method between a UE and a base station is supported in an unlicensed band. In addition, a mechanism for supporting communication in an unlicensed band between sidelink UEs is planned to be supported in Rel-18.

In the present disclosure, a channel may refer to a set of frequency domain resources in which Listen-Before-Talk (LBT) is performed. In NR-U, the channel may refer to an LBT bandwidth with 20 MHz and may have the same meaning as an RB set. For example, the RB set may be defined in section 7 of 3GPP TS 38.214 V17.0.0.

In the present disclosure, channel occupancy (CO) may refer to time/frequency domain resources obtained by the base station or the UE after LBT success.

In the present disclosure, channel occupancy time (COT) may refer to time domain resources obtained by the base station or the UE after LBT success. It may be shared between the base station (or the UE) and the UE (or the base station) that obtained the CO, and this may be referred to as COT sharing. Depending on the initiating device, this may be referred to as gNB-initiated COT or UE-initiated COT.

Hereinafter, a wireless communication system supporting an unlicensed band/shared spectrum will be described.

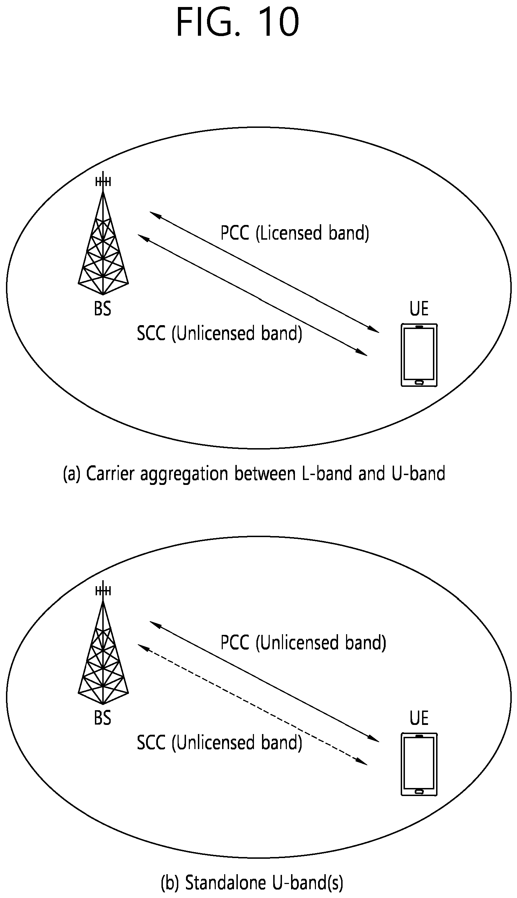

FIG. 10 shows an example of a wireless communication system supporting an unlicensed band, based on an embodiment of the present disclosure. For example, FIG. 10 may include an unlicensed spectrum (NR-U) wireless communication system. The embodiment of FIG. 10 may be combined with various embodiments of the present disclosure.

In the following description, a cell operating in a licensed band (hereinafter, L-band) may be defined as an L-cell, and a carrier of the L-cell may be defined as a (DL/UL/SL) LCC. In addition, a cell operating in an unlicensed band (hereinafter, U-band) may be defined as a U-cell, and a carrier of the U-cell may be defined as a (DL/UL/SL) UCC. The carrier/carrier-frequency of a cell may refer to the operating frequency (e.g., center frequency) of the cell. A cell/carrier (e.g., CC) is commonly called a cell.

When the base station and the UE transmit and receive signals on carrier-aggregated LCC and UCC as shown in (a) of FIG. 10, the LCC and the UCC may be configured as a primary CC (PCC) and a secondary CC (SCC), respectively. The base station and the UE may transmit and receive signals on one UCC or on a plurality of carrier-aggregated UCCs as shown in (b) of FIG. 10. In other words, the base station and the UE may transmit and receive signals only on UCC(s) without using any LCC. For a standalone operation, PRACH transmission, PUCCH transmission, PUSCH transmission, SRS transmission, etc. may be supported on a UCell.

In the embodiment of FIG. 10, the base station may be replaced with the UE. In this case, for example, PSCCH transmission, PSSCH transmission, PSFCH transmission, S-SSB transmission, etc. may be supported on a UCell.

Unless otherwise mentioned, the following definitions may be applied to terms used herein. For example, unlicensed spectrum and shared spectrum may be mutually interchangeable/substitutable in this disclosure. For example, channel sensing (on shared spectrum) in the present disclosure may refer to channel sensing related to a channel access procedure (CAP). The CAP may include a step of (channel) sensing for a resource (or, channel) on which a transmission is to be performed.

- Channel: a carrier or a part of a carrier composed of a contiguous set of RBs in which a channel access procedure is performed in a shared spectrum.
- Channel access procedure (CAP): a procedure of assessing channel availability based on sensing before signal transmission in order to determine whether other communication node(s) are using a channel. A basic sensing unit is a sensing slot with a duration of $T_{sl} = 9$ us. The base station or the UE senses a channel during a sensing slot duration. If power detected for at least 4 us within the sensing slot duration is less than an energy detection threshold $X_{thresh}$, the sensing slot duration $T_{sl}$ is considered to be idle. Otherwise, the sensing slot duration $T_{sl} = 9$ us is considered to be busy. CAP may also be referred to as listen before talk (LBT). For example, a channel access procedure (CAP) may include an LBT, and channel sensing may be performed to monitor the power of that channel during a specific time interval (channel sensing interval) for the CAP.
- Channel occupancy: transmission(s) on channel(s) by the base station/UE after a channel access procedure.
- Channel occupancy time (COT): a total time during which the base station/UE and any base station/UE(s) sharing channel occupancy can perform transmission(s) on a channel after the base station/UE perform a channel access procedure. In the case of determining COT, if a transmission gap is less than or equal to 25 us, the gap duration may be counted in the COT. The COT may be shared for transmission between the base station and corresponding UE(s).
- DL transmission burst: a set of transmissions without any gap greater than 16 us from the base station. Transmissions from the base station, which are separated by a gap exceeding 16 us are considered as separate DL transmission bursts. The base station may perform transmission(s) after a gap without sensing channel availability within a DL transmission burst.
- UL or SL transmission burst: a set of transmissions without any gap greater than 16 us from the UE. Transmissions from the UE, which are separated by a gap exceeding 16 us are considered as separate UL or SL transmission bursts. The UE may perform transmission(s) after a gap without sensing channel availability within a UL or SL transmission burst.
- Discovery burst: a DL transmission burst including a set of signal(s) and/or channel(s) confined within a window and associated with a duty cycle. In the LTE-based system, the discovery burst may be transmission(s) initiated by the base station, which includes PSS, an SSS, and cell-specific RS (CRS) and further includes non-zero power CSI-RS. In the NR-based system, the discover burst may be transmission(s) initiated by the base station, which includes at least an SS/PBCH block and further includes CORESET for a PDCCH scheduling a PDSCH carrying SIB1, the PDSCH carrying SIB1, and/or non-zero power CSI-RS.

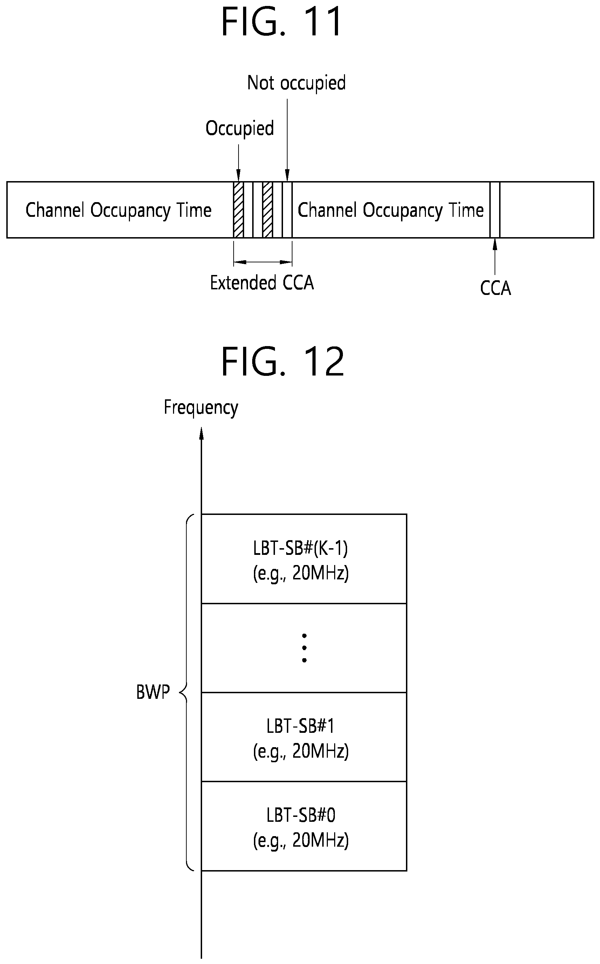

FIG. 11 shows a method of occupying resources in an unlicensed band, based on an embodiment of the present disclosure. The embodiment of FIG. 11 may be combined with various embodiments of the present disclosure.

Referring to FIG. 11, a communication node (e.g., base station, UE) within an unlicensed band should determine whether other communication node(s) is using a channel before signal transmission. To this end, the communication node within the unlicensed band may perform a channel access procedure (CAP) to access channel(s) on which transmission(s) is performed. The channel access procedure may be performed based on sensing. For example, the communication node may perform carrier sensing (CS) before transmitting signals so as to check whether other communication node(s) perform signal transmission. When the other communication node(s) perform no signal transmission, it is the that clear channel assessment (CCA) is confirmed. If a CCA threshold (e.g., $X_{Thresh}$) is predefined or configured by a higher layer (e.g., RRC), the communication node may determine that the channel is busy if the detected channel energy is higher than the CCA threshold. Otherwise, the communication node may determine that the channel is idle. If it is determined that the channel is idle, the communication node may start the signal transmission in the unlicensed band. The CAP may be replaced with the LBT. For example, a channel access procedure (CAP) may include an LBT, and channel sensing may be performed to monitor the power of that channel during a specific time interval (channel sensing interval) for the CAP.

Table 11 shows an example of the channel access procedure (CAP) supported in NR-U.

[Table 11]

| | Type | Explanation |
|---|---|---|
| DL | Type 1 CAP | CAP with random back-off<br>- time duration spanned by the sensing slots that are sensed to be idle before a downlink transmission(s) is random |
| | Type 2 CAP<br>- Type 2A, 2B, 2C | CAP without random back-off<br>- time duration spanned by sensing slots that are sensed to be idle before a downlink transmission(s) is deterministic |
| UL or SL | Type 1 CAP | CAP with random back-off<br>- time duration spanned by the sensing slots that are sensed to be idle before an uplink or sidelink transmission(s) is random |
| | Type 2 CAP<br>- Type 2A, 2B, 2C | CAP without random back-off<br>- time duration spanned by sensing slots that are sensed to be idle before an uplink or sidelink transmission(s) is deterministic |

Referring to Table 11, the LBT type or CAP for DL/UL/SL transmission may be defined. However, Table 11 is only an example, and a new type or CAP may be defined in a similar manner. For example, the type 1 (also referred to as Cat-4 LBT) may be a random back-off based channel access procedure. For example, in the case of Cat-4, the contention window may change. For example, the type 2 can be performed in case of COT sharing within COT acquired by the base station (gNB) or the UE.

Hereinafter, LBT-SubBand (SB) (or RB set) will be described.

In a wireless communication system supporting an unlicensed band, one cell (or carrier (e.g., CC)) or BWP configured for the UE may have a wideband having a larger bandwidth (BW) than in legacy LTE. However, a BW requiring CCA based on an independent LBT operation may be limited according to regulations. Let a subband (SB) in which LBT is individually performed be defined as an LBT-SB. Then, a plurality of LBT-SBs may be included in one wideband cell/BWP. A set of RBs included in an LBT-SB may be configured by higher-layer (e.g., RRC) signaling. Accordingly, one or more LBT-SBs may be included in one cell/BWP based on (i) the BW of the cell/BWP and (ii) RB set allocation information.

FIG. 12 shows a case in which a plurality of LBT-SBs are included in an unlicensed band, based on an embodiment of the present disclosure. The embodiment of FIG. 12 may be combined with various embodiments of the present disclosure.

Referring to FIG. 12, a plurality of LBT-SBs may be included in the BWP of a cell (or carrier). An LBT-SB may have, for example, a 20-MHz band. The LBT-SB may include a plurality of contiguous (P)RBs in the frequency domain, and thus may be referred to as a (P)RB set. While not shown, a guard band (GB) may be interposed between LBT-SBs. Accordingly, the BWP may be configured in the form of {LBT-SB #0 (RB set #0)+GB #0+LBT-SB #1 (RB set #1+GB #1) + ... +LBT-SB #(K-1) (RB set (#K-1))}. For convenience, LBT-SB/RB indexes may be configured/defined in an increasing order from the lowest frequency to the highest frequency.

Hereinafter, a channel access priority class (CAPC) will be described.

The CAPCs of MAC CEs and radio bearers may be fixed or configured to operate in FR1:

- Fixed to lowest priority for padding buffer status report (BSR) and recommended bit rate MAC CE;
- Fixed to highest priority for SRB0, SRB1, SRB3 and other MAC CEs;
- Configured by the base station for SRB2 and DRB.

When selecting a CAPC of a DRB, the base station considers fairness between other traffic types and transmissions while considering 5QI of all QoS flows multiplexed to the corresponding DRB. Table 12 shows which CAPC should be used for standardized 5QI, that is, a CAPC to be used for a given QoS flow. For standardized 5QI, CAPCs are defined as shown in the table below, and for non-standardized 5QI, the CAPC with the best QoS characteristics should be used.

[Table 12]

| CAPC | 5QI |
|---|---|
| 1 | 1, 3, 5, 65, 66, 67, 69, 70, 79, 80, 82, 83, 84, 85 |
| 2 | 2, 7, 71 |
| 3 | 4, 6, 8, 9, 72, 73, 74, 76 |
| 4 | - |
| NOTE: A lower CAPC value indicates a higher priority. | |

Hereinafter, a method of transmitting a downlink signal through an unlicensed band will be described. For example, a method of transmitting a downlink signal through an unlicensed band may be applied to a method of transmitting a sidelink signal through an unlicensed band.

The base station may perform one of the following channel access procedures (e.g., CAP) for downlink signal transmission in an unlicensed band.

(1) Type 1 downlink (DL) CAP Method

In the type 1 DL CAP, the length of a time duration spanned by sensing slots sensed to be idle before transmission(s) may be random. The type 1 DL CAP may be applied to the following transmissions:

- Transmission(s) initiated by the base station including (i) a unicast PDSCH with user plane data or (ii) the unicast PDSCH with user plane data and a unicast PDCCH scheduling user plane data, or
- Transmission(s) initiated by the base station including (i) a discovery burst only or (ii) a discovery burst multiplexed with non-unicast information.

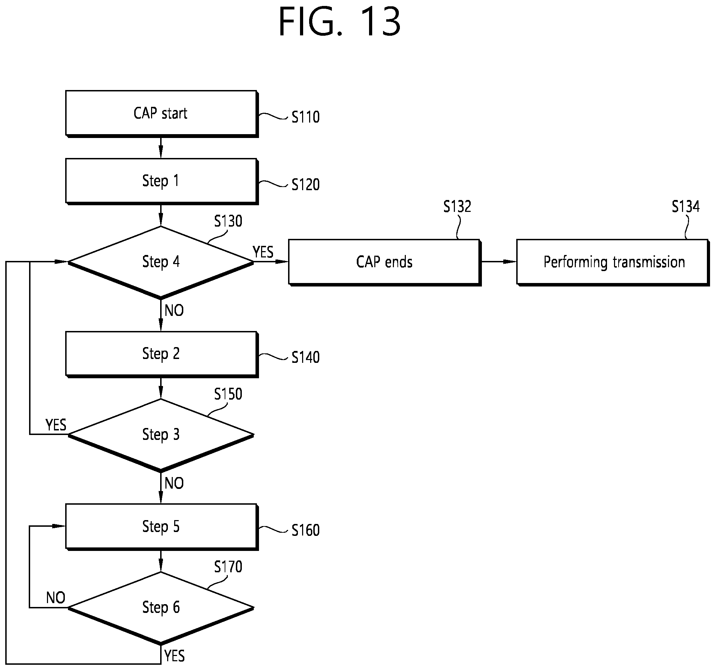

FIG. 13 shows CAP operations performed by a base station to transmit a downlink signal through an unlicensed band, based on an embodiment of the present disclosure. The embodiment of FIG. 13 may be combined with various embodiments of the present disclosure.

Referring to FIG. 13, the base station may sense whether a channel is idle for sensing slot durations of a defer duration $T_d$. Then, if a counter N is zero, the base station may perform transmission (S134). In this case, the base station may adjust the counter N by sensing the channel for additional sensing slot duration(s) according to the following steps:

Step 1) (S120) The base station sets N to $N_{init}$ (N= $N_{init}$), where $N_{init}$ is a random number uniformly distributed between 0 and $CW_p$. Then, step 4 proceeds.
Step 2) (S140) If N>0 and the base station determines to decrease the counter, the base station sets N to N-1 (N=N-1).
Step 3) (S150) The base station senses the channel for the additional sensing slot duration. If the additional sensing slot duration is idle (Y), step 4 proceeds. Otherwise (N), step 5 proceeds.
Step 4) (S130) If N=0 (Y), the base station terminates the CAP (S132). Otherwise (N), step 2 proceeds.
Step 5) (S160) The base station senses the channel until either a busy sensing slot is detected within an additional defer duration $T_d$ or all the slots of the additional defer duration $T_d$ are detected to be idle.
Step 6) (S170) If the channel is sensed to be idle for all the slot durations of the additional defer duration $T_d$ (Y), step 4 proceeds. Otherwise (N), step 5 proceeds.

Table 13 shows that $m_p$, a minimum contention window (CW), a maximum CW, a maximum channel occupancy time (MCOT), and an allowed CW size, which are applied to the CAP, vary depending on channel access priority classes.

[Table 13]

| Channel Access Priority Class (p) | $m_p$ | $CW_{min,p}$ | $CW_{max,p}$ | $T_{mcot,p}$ | allowed $CW_p$ sizes |
|---|---|---|---|---|---|
| 1 | 1 | 3 | 7 | 2 ms | {3,7} |

(continued)

| Channel Access Priority Class (p) | $m_p$ | $CW_{min,p}$ | $CW_{max,p}$ | $T_{mcot,p}$ | allowed $CW_p$ sizes |
|---|---|---|---|---|---|
| 2 | 1 | 7 | 15 | 3 ms | {7,15} |
| 3 | 3 | 15 | 63 | 8 or 10 ms | {15,31,63} |
| 4 | 7 | 15 | 1023 | 8 or 10 ms | {15,31,63,127,255,511,1023} |

Referring to Table 13, a contention window size (CWS), a maximum COT value, etc. for each CAPC may be defined. For example, $T_d$ may be equal to $T_f + m_p * T_{sl}$ ($T_d = T_f + m_p * T_{sl}$).

The defer duration $T_d$ is configured in the following order: duration $T_f$ (16 us) + $m_p$ consecutive sensing slot durations $T_{sl}$ (9 us). $T_f$ includes the sensing slot duration $T_{sl}$ at the beginning of the 16 us duration.

The following relationship is satisfied: $CW_{min,p} <= CW_p <= CW_{max,p}$. $CW_p$ may be configured by $CW_p = CW_{min,p}$ and updated before step 1 based on HARQ-ACK feedback (e.g., the ratio of ACK or NACK) for a previous DL burst (e.g., PDSCH) (CW size update). For example, $CW_p$ may be initialized to $CW_{min,p}$ based on the HARQ-ACK feedback for the previous DL burst. Alternatively, $CW_p$ may be increased to the next higher allowed value or maintained as it is.

(2) Type 2 downlink (DL) CAP Method

In the type 2 DL CAP, the length of a time duration spanned by sensing slots sensed to be idle before transmission(s) may be determined. The type 2 DL CAP is classified into type 2A/2B/2C DL CAPs.

The type 2A DL CAP may be applied to the following transmissions. In the type 2A DL CAP, the base station may perform transmission immediately after the channel is sensed to be idle at least for a sensing duration $T_{short\_dl}$ = 25 us. Herein, $T_{short\_dl}$ includes the duration $T_f$ (=16 us) and one sensing slot duration immediately after the duration $T_f$, where the duration $T_f$ includes a sensing slot at the beginning thereof.

- Transmission(s) initiated by the base station including (i) a discovery burst only or (ii) a discovery burst multiplexed with non-unicast information, or
- Transmission(s) by the base station after a gap of 25 us from transmission(s) by the UE within a shared channel occupancy.

The type 2B DL CAP is applicable to transmission(s) performed by the base station after a gap of 16 us from transmission(s) by the UE within a shared channel occupancy time. In the type 2B DL CAP, the base station may perform transmission immediately after the channel is sensed to be idle for $T_f$ = 16 us. $T_f$ includes a sensing slot within 9 us from the end of the duration. The type 2C DL CAP is applicable to transmission(s) performed by the base station after a maximum of 16 us from transmission(s) by the UE within the shared channel occupancy time. In the type 2C DL CAP, the base station does not perform channel sensing before performing transmission.

Hereinafter, a method of transmitting an uplink signal through an unlicensed band will be described. For example, a method of transmitting an uplink signal through an unlicensed band may be applied to a method of transmitting a sidelink signal through an unlicensed band.

The UE may perform type 1 or type 2 CAP for UL signal transmission in an unlicensed band. In general, the UE may perform the CAP (e.g., type 1 or type 2) configured by the base station for UL signal transmission. For example, a UL grant scheduling PUSCH transmission (e.g., DCI formats 0_0 and 0_1) may include CAP type indication information for the UE.

(1) Type 1 uplink (UL) CAP Method

In the type 1 UL CAP, the length of a time duration spanned by sensing slots sensed to be idle before transmission(s) is random. The type 1 UL CAP may be applied to the following transmissions.

- PUSCH/SRS transmission(s) scheduled and/or configured by the base station
- PUCCH transmission(s) scheduled and/or configured by the base station
- Transmission(s) related to a random access procedure (RAP)

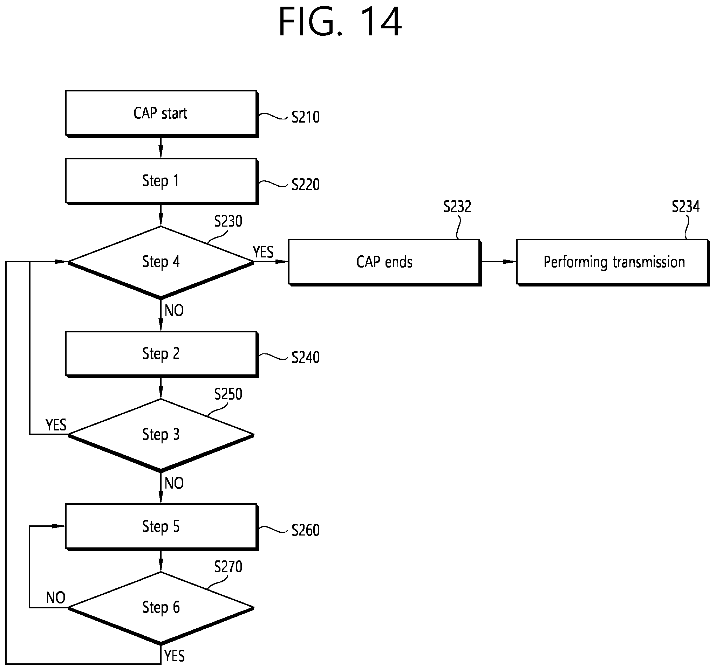

FIG. 14 shows type 1 CAP operations performed by a UE to transmit an uplink signal, based on an embodiment of the present disclosure. The embodiment of FIG. 14 may be combined with various embodiments of the present disclosure.

Referring to FIG. 14, the UE may sense whether a channel is idle for sensing slot durations of a defer duration $T_d$. Then, if a counter N is zero, the UE may perform transmission (S234). In this case, the UE may adjust the counter N by sensing the channel for additional sensing slot duration(s) according to the following steps:

Step 1) (S220) The UE sets N to $N_{init}$ (N = $N_{init}$), where $N_{init}$ is a random number uniformly distributed between 0 and $CW_p$. Then, step 4 proceeds.

Step 2) (S240) If N>0 and the UE determines to decrease the counter, the UE sets N to N-1 (N = N-1).

Step 3) (S250) The UE senses the channel for the additional sensing slot duration. If the additional sensing slot duration is idle (Y), step 4 proceeds. Otherwise (N), step 5 proceeds.

Step 4) (S230) If N=0 (Y), the UE terminates the CAP (S232). Otherwise (N), step 2 proceeds.

Step 5) (S260) The UE senses the channel until either a busy sensing slot is detected within an additional defer duration $T_d$ or all the slots of the additional defer duration $T_d$ are detected to be idle.

Step 6) (S270) If the channel is sensed to be idle for all the slot durations of the additional defer duration $T_d$ (Y), step 4 proceeds. Otherwise (N), step 5 proceeds.

Table 14 shows that $m_p$, a minimum CW, a maximum CW, a maximum channel occupancy time (MCOT), and an allowed CW size, which are applied to the CAP, vary depending on channel access priority classes.

[Table 14]

| Channel Access Priority Class (p) | mp | $CW_{min,p}$ | $CW_{max,p}$ | $T_{ulmcot,p}$ | allowed $CW_p$ sizes |
|---|---|---|---|---|---|
| 1 | 2 | 3 | 7 | 2 ms | {3,7} |
| 2 | 2 | 7 | 15 | 4 ms | {7,15} |
| 3 | 3 | 15 | 1023 | 6 or 10 ms | {15,31,63,127,255,511,1023} |
| 4 | 7 | 15 | 1023 | 6 or 10 ms | {15,31,63,127,255,511,1023} |

Referring to Table 14, a contention window size (CWS), a maximum COT value, etc. for each CAPC may be defined. For example, $T_d$ may be equal to $T_f + m_p * T_{sl}$ ($T_d = T_f + m_p * T_{sl}$).

The defer duration $T_d$ is configured in the following order: duration $T_f$ (16 us) + $m_p$ consecutive sensing slot durations $T_{sl}$ (9 us). $T_f$ includes the sensing slot duration $T_{sl}$ at the beginning of the 16 us duration.

The following relationship is satisfied: $CW_{min,p} <= CW_p <= CW_{max,p}$. $CW_p$ may be configured by $CW_p = CW_{min,p}$ and updated before step 1 based on an explicit/implicit reception response for a previous UL burst (e.g., PUSCH) (CW size update). For example, $CW_p$ may be initialized to $CW_{min,p}$ based on the explicit/implicit reception response for the previous UL burst. Alternatively, $CW_p$ may be increased to the next higher allowed value or maintained as it is.

(2) Type 2 uplink (UL) CAP Method

In the type 2 UL CAP, the length of a time duration spanned by sensing slots sensed to be idle before transmission(s) may be determined. The type 2 UL CAP is classified into type 2A/2B/2C UL CAPs. In the type 2A UL CAP, the UE may perform transmission immediately after the channel is sensed to be idle at least for a sensing duration $T_{short\_dl}$ = 25 us. Herein, $T_{short\_dl}$ includes the duration $T_f$ (= 16 us) and one sensing slot duration immediately after the duration $T_f$. In the type 2A UL CAP, $T_f$ includes a sensing slot at the beginning thereof. In the type 2B UL CAP, the UE may perform transmission immediately after the channel is sensed to be idle for the sensing duration $T_f$ = 16 us. In the type 2B UL CAP, $T_f$ includes a sensing slot within 9 us from the end of the duration. In the type 2C UL CAP, the UE does not perform channel sensing before performing transmission.

For example, according to the type 1 LBT-based NR-U operation, the UE having uplink data to be transmitted may select a CAPC mapped to 5QI of data, and the UE may perform the NR-U operation by applying parameters of the corresponding CACP (e.g., minimum contention window size, maximum contention window size, $m_p$, etc.). For example, the UE may select a backoff counter (BC) after selecting a random value between the minimum CW and the maximum CW mapped to the CAPC. In this case, for example, the BC may be a positive integer less than or equal to the random value. The UE sensing a channel decreases the BC by 1 if the channel is idle. If the BC becomes zero and the UE detects that the channel is idle for the time $T_d$ ($T_d = T_f + m_p * T_{sl}$), the UE may attempt to transmit data by occupying the channel. For example, $T_{sl}$ (= 9 usec) is a basic sensing unit or sensing slots, and may include a measurement duration for at least 4 usec. For example, the front 9 usec of $T_f$ (= 16 usec) may be configured to be $T_{sl}$.

For example, according to the type 2 LBT-based NR-U operation, the UE may transmit data by performing the type 2 LBT (e.g., type 2A LBT, type 2B LBT, or type 2C LBT) within COT.

For example, the type 2A (also referred to as Cat-2 LBT (one shot LBT) or one-shot LBT) may be 25 usec one-shot LBT. In this case, transmission may start immediately after idle sensing for at least a 25 usec gap. The type 2A may be used to initiate transmission of SSB and non-unicast DL information. That is, the UE may sense a channel for 25 usec within COT, and if the channel is idle, the UE may attempt to transmit data by occupying the channel.

For example, the type 2B may be 16 usec one-shot LBT. In this case, transmission may start immediately after idle sensing for a 16 usec gap. That is, the UE may sense a channel for 16 usec within COT, and if the channel is idle, the UE may attempt to transmit data by occupying the channel.

For example, in the case of the type 2C (also referred to as Cat-1 LBT or No LBT), LBT may not be performed. In this case, transmission may start immediately after a gap of up to 16 usec and a channel may not be sensed before the transmission. The duration of the transmission may be up to 584 usec. The UE may attempt transmission after 16 usec without sensing, and the UE may perform transmission for up to 584 usec.

In a sidelink unlicensed band, the UE may perform a channel access operation based on Listen Before Talk (LBT). Before the UE accesses a channel in an unlicensed band, the UE should check whether the channel to be accessed is idle (e.g., a state in which UEs do not occupy the channel, a state in which UEs can access the corresponding channel and transmit data) or busy (e.g., a state in which the channel is occupied and data transmission/reception is performed on the corresponding channel, and the UE attempting to access the channel cannot transmit data while the channel is busy). That is, the operation in which the UE checks whether the channel is idle or busy may be referred to as Clear Channel Assessment (CCA), and the UE may check whether the channel is idle or busy for the CCA duration.

Meanwhile, in a future system, a UE may perform a sidelink transmission and/or reception operation in an unlicensed band. For operations in an unlicensed band, depending on band-specific regulations or requirements, a UE's transmission may be preceded by a channel sensing operation (e.g., energy detection/measurement) for the channel to be used, a UE may perform a transmission in the unlicensed band only if, as a result of the channel sensing, the channel or RB set to be used is determined to be IDLE (e.g., if the measured energy is less than or equal to or greater than a certain threshold value), and, if, according to a result of the channel sensing, the channel or RB set to be used is determined to be BUSY (e.g., if the measured energy is greater than or equal to or greater than a certain threshold value), the UE may cancel all or part of the transmission in the unlicensed band.

Meanwhile, in operation in an unlicensed band, a UE may omit or simplify the channel sensing operation (i.e., make the channel sensing interval relatively small) within a certain time interval after a transmission for a certain time period, or conversely, after a certain time interval after the transmission, the UE may decide whether to transmit or not after performing the usual channel sensing operation.

On the other hand, in a transmission in an unlicensed band, depending on regulations or requirements, the size and/or power spectral density (PSD) of the time interval and/or frequency occupied region of the signal/channel transmitted by the UE may be greater than or equal to a certain level, respectively.

On the other hand, in unlicensed bands, in order to simplify channel sensing, it may be informed through channel occupancy time (COT) interval information that the channel obtained through initial general channel sensing is occupied for a certain period of time, and the length of the COT duration may be configured to have different maximum values depending on the priority of the service or data packet or the channel access priority class (CAPC).

Meanwhile, a sidelink transmission in an unlicensed band may be performed in the form of being transmitted through a plurality of RBs spaced apart according to a standard. For uplink channel transmission in an unlicensed band, a UE may be provided by a base station with information for a single or plurality of RB set(s) and a single or plurality of interlaces, and the final transmission resource may be determined from among the intersection of RBs within the provided RB set and RBs corresponding to the provided interlaces.

Meanwhile, an interlace may be defined in a common RB (CRB) grid, and an interlace may mean a set of RBs spaced 10 RBs apart in the CRB grid when the SCS is 15 kHz, or a set of RBs spaced 5 RBs apart in the CRB grid when the SCS is 30 kHz. For example, an interlace index for each interlace may be determined based on CRB #0 and the RB offset.

On the other hand, in the case of sidelink communication, sensing and/or resource (re)selection is performed in units of subchannels, so it may be necessary for subchannels to be represented in the form of interlaces and/or RB sets. By representing subchannels as a set of interlaces and/or RBs, subchannel-based sensing operations and/or resource reservation methods may be reused as much as possible (even in an unlicensed band).

On the other hand, there is no interlace structure defined for the case where the SCS is 60 kHz, and if sidelink transmissions and receptions are performed based on a 60 kHz SCS, it may be necessary to define a method to ensure that the size of the bandwidth within the occupied channel is at least a certain ratio (e.g., 80%) to the channel size, according to the occupied channel bandwidth (OCB) requirement.

According to one embodiment of the present disclosure, the embodiments for SCS of 60 kHz and other SCS may be extended to include embodiments for SCS of 15 kHz and/or 30 kHz. According to one embodiment of the present disclosure, the embodiments for SCS of 60 kHz may be extended and applied to SCS of 15 kHz and/or 30 kHz.

On the one hand, if the number of PRBs allocated for sidelink transmissions is increased to meet OCB requirements and PSD requirements, e.g., especially if the number of PRBs allocated for PSFCH resources is increased, there may be a shortage of frequency domain resources. On the other hand, if a small number of PRBs are allocated and located at the end of the channel to meet OCB requirements, the total transmit power may be limited by PSD requirements.

For example, in a future system, a dedicated PRB to which practical information (e.g., HARQ-ACK feedback or control information) is mapped, and a common interlace and/or common RB(s) that a plurality of UEs may share and over which they may perform transmissions may be used for a transmission to meet OCB requirements.

On the other hand, the OCB requirement may be (temporarily) omitted within a channel occupancy time (COT) duration, in which case the occupied channel bandwidth still needs to be greater than and/or equal to 2 MHz

For example, outside of the COT or at initialization of the COT, the spacing between common interlaces and/or common RBs and the number of RBs used for a PSFCH transmission may be determined such that at least 80% of the corresponding channel bandwidth is secured to meet OCB requirements. For example, if a PSFCH transmission is performed by sharing it within a COT, the spacing between common interlaces and/or common RBs and the number of RBs may be determined such that the 2 MHz channel occupancy is satisfied. In other words, the spacing between RBs in the above may be different for the outside and inside of the COT.

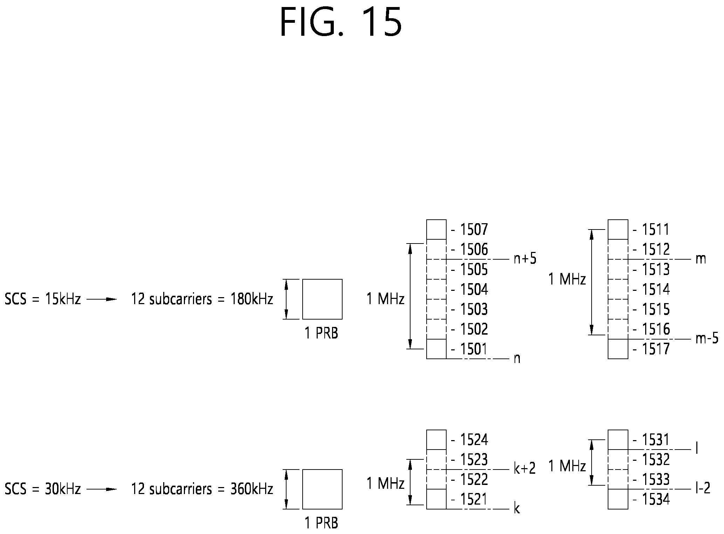

FIG. 15 shows the range of excluding common PRBs to satisfy channel occupancy requirements, according to one embodiment of the present disclosure. The embodiment of FIG. 15 may be combined with various embodiments of the present disclosure.

Referring to Figure 15, the range in which common PRBs are excluded according to the position of the SCS and dedicated PRBs used for an SL transmission when performing simultaneous PSFCH transmissions is shown.

For example, if 15 kHz is used for SCS, the frequency bandwidth of one PRB may be 180 kHz, since the frequency resource of one PRB consists of 12 subcarriers. Here, if a dedicated PRB for a PSFCH transmission is allocated to PRB 1501, the center frequencies of PRBs 1502 through 1506 may be included in a 1 MHz range in a direction increasing from the center frequency of PRB 1501. For example, to meet PSD requirements, if a dedicated PRB is allocated to PRB 1501, the common PRBs located in PRBs 1502 through 1506 may be excluded when performing a simultaneous PSFCH transmission. For example, since the center frequency of PRB 1507 is outside the range of 1 MHz from the center frequency of PRB 1501, a common PRB may be allocated to PRB 1507 even if a dedicated PRB is allocated to PRB 1501.

Here, if the PRB index of PRB 1501 is assumed to be n, then the PRB index of PRB 1506 may be n+5 and the PRB index of PRB 1507 may be n+6. In other words, a common PRB located in a PRB with an index higher than the PRB index of the PRB to which the dedicated PRB is allocated by an index of 5 or less may be excluded from performing a simultaneous PSFCH transmission to fulfill the PSD requirement.

For example, if a dedicated PRB for a PSFCH transmission is allocated to PRB 1511, the center frequencies of PRBs 1512 through PRB 1516 may be included in a 1 MHz range in a direction descending from the center frequency of PRB 1511. For example, to meet PSD requirements, if a dedicated PRB is allocated to PRB 1511, the common PRBs located in PRBs 1512 through 1516 may be excluded when performing a simultaneous PSFCH transmission. For example, since the center frequency of PRB 1517 is outside the range of 1 MHz from the center frequency of PRB 1511, a common PRB may be allocated to PRB 1517 even if a dedicated PRB is allocated to PRB 1511.

Here, if the PRB index of PRB 1511 is assumed to be m, then the PRB index of PRB 1516 may be m-5 and the PRB index of PRB 1517 may be m-6. In other words, a common PRB located in a PRB with an index lower than the PRB index of the PRB to which the dedicated PRB is allocated by an index of 5 or less may be excluded when performing a simultaneous PSFCH transmission to satisfy the PSD requirement.

For example, when 15 kHz is used for SCS as described above, if the absolute value of the difference between the index of the PRB to which the dedicated PRB is allocated and the index of the PRB to which the common PRB is allocated is 5 or less, the common PRB may be excluded from performing the simultaneous PSFCH transmission. For example, the common PRB may be excluded from performing the simultaneous PSFCH transmission and thus excluded from the calculation of the total transmit power required for the PSFCH transmission.

Further, for example, if 30 kHz is used for SCS, the frequency bandwidth of one PRB may be 360 kHz, since the frequency resource of one PRB consists of 12 subcarriers. Here, if a dedicated PRB for PSFCH transmission is allocated to PRB 1521, the center frequencies of PRBs 1522 to 1523 may be included in a 1 MHz range in a direction increasing from the center frequency of PRB 1521. For example, to meet PSD requirements, if a dedicated PRB is allocated to PRB 1521, the common PRBs located in PRBs 1522 through 1523 may be excluded when performing a simultaneous PSFCH transmission. For example, since the center frequency of PRB 1524 is outside the range of 1 MHz from the center frequency of PRB 1521, a common PRB may be allocated to PRB 1524 even if a dedicated PRB is allocated to PRB 1521.

Here, if the PRB index of PRB 1521 is assumed to be k, then the PRB index of PRB 1523 may be k+2 and the PRB index of PRB 1524 may be k+3. In other words, a common PRB located in a PRB with an index higher than the PRB index of the PRB to which the dedicated PRB is allocated by an index of 2 or less may be excluded from performing a simultaneous PSFCH transmission in order to fulfill the PSD requirement.

For example, if a dedicated PRB for PSFCH transmission is allocated to PRB 1531, the center frequencies of PRBs 1532 through PRB 1533 may be included in a 1 MHz range in a direction descending from the center frequency of PRB 1531. For example, to meet PSD requirements, if a dedicated PRB is allocated to PRB 1531, the common PRBs located in PRBs 1532 through 1533 may be excluded when performing a simultaneous PSFCH transmission. For example, since the center frequency of PRB 1534 is outside the range of 1 MHz from the center frequency of PRB 1531, a common PRB may be allocated to PRB 1534 even if a dedicated PRB is allocated to PRB 1531.

Here, if the PRB index of PRB 1531 is assumed to be 1, then the PRB index of PRB 1533 may be 1-2 and the PRB index of PRB 1534 may be 1-3. In other words, a common PRB located in a PRB with an index lower than the PRB index of the PRB to which the dedicated PRB is allocated by an index of 2 or less may be excluded when performing a simultaneous PSFCH transmission to satisfy the PSD requirement.

For example, when 30 kHz is used for SCS as described above, if the absolute value of the difference between the index of the PRB to which the dedicated PRB is allocated and the index of the PRB to which the common PRB is allocated is 2 or less, the corresponding common PRB may be excluded from performing a simultaneous PSFCH transmission. For example, the corresponding common PRB may be excluded from performing a simultaneous PSFCH transmission and thus excluded from the calculation of the total transmit power required for the PSFCH transmission.

According to one embodiment of the present disclosure, if the number of PSFCH transmissions to be mapped to a first dedicated PRB is determined in the transmit power control procedure for PSFCH or PSFCH transmission(s) (for the purpose of transmitting HARQ-ACK feedback or control information) to be mapped to a dedicated PRB, and (subsequently) the use of a common interlace and/or common RB (or, the common interlace and/or common RB to be used) is determined, a UE may determine the number of second PSFCH transmissions to be mapped to a second dedicated PRB based on this. For example, the number of second PSFCH transmissions to be mapped to the second dedicated PRB may be less than or equal to the number of PSFCH transmissions to be mapped to the first dedicated PRB.

Or, for example, if the number of PSFCH transmissions to be mapped to a first dedicated PRB is determined in the transmit power control procedure for the PSFCH or PSFCH transmission(s) (for the purpose of transmitting HARQ-ACK feedback or control information) to be mapped to a dedicated PRB, and (subsequently) the use of a common interlace and/or common RB is determined (or, the common interlace and/or common RB to be used), a UE may determine the number of second PSFCH transmissions to be mapped to a second dedicated PRB based on the common interlace and/or common RB to be used. For example, the number of second PSFCH transmissions to be mapped to the second dedicated PRB may be less than or equal to the number of PSFCH transmissions to be mapped to the first dedicated PRB.

Specifically, for example, a UE may, for dedicated PRBs, determine the number of PSFCH transmissions to be mapped to a first dedicated PRB such that P_CMAX is not exceeded based on the maximum number of simultaneously transmittable PSFCH (PRB) transmissions of the UE, the maximum transmit power value P_CMAX of the UE, and/or the required power for a single PSFCH (PRB). For example, the P_CMAX value may be a value determined by assuming the number of target PSFCH (PRB) transmissions to be simultaneously transmitted by a UE and/or the maximum number of PSFCH (PRB) transmissions that can be simultaneously transmitted by the UE.

For example, a UE may determine the combination of the number/location of PSFCH transmissions to be mapped to a second dedicated PRB and a common interlace (common PRB) to be transmitted, based on the transmit power for the PSFCH transmissions to be mapped to a dedicated PRB, the required or allocated power for a common interlace (common PRB), and/or the number of PSFCH (PRB) transmissions to be transmitted simultaneously by the UE, in comparison to the UE's maximum transmit power. For example, the number of PSFCH (PRB) transmissions to be transmitted simultaneously by a UE may mean the number of dedicated PRBs.

For example, a UE may determine the combination of the number/location of PSFCH transmissions to be mapped to a second dedicated PRB and the common interlace (common PRB) by comparing the total required power related to a PSFCH simultaneous transmission, determined based on the transmit power for the PSFCH transmissions to be mapped to the dedicated PRB, the required or allocated power for the common interlace (common PRB), and/or the number of PSFCH (PRB) transmissions to be simultaneously transmitted by the UE, with the maximum transmit power of the UE. For example, the number of PSFCH (PRB) transmissions to be transmitted simultaneously by a UE may mean the number of dedicated PRBs.

For example, a UE may determine the number of PSFCH transmissions to be mapped to a second dedicated PRB such that the total required power related to the simultaneous PSFCH transmissions does not exceed a maximum transmit power of the UE. For example, the maximum transmit power may be determined assuming the PSFCH transmission(s) to be mapped to the dedicated PRB, a common interlace, and/or a common PRB transmission. For example, a UE may determine a transmit power value for the common interlace and/or common RB within a difference value between the UE's transmit maximum power value P_CMAX and the transmit power value for the PSFCH transmission(s) to be mapped to the dedicated PRB.

For example, the minimum value, maximum value, and/or use value of the transmit power for a common interlace and/or a common PRB may be (pre-)configured.

For example, the minimum, maximum, and/or use values for PSD values for common interlaces and/or common PRBs may be (pre-)configured.

For example, the transmission power for the common interlace and/or the common PRB, the minimum value and/or the maximum value of the transmission power may be determined based on the power for each PRB, which is determined when assuming a maximum number of simultaneously transmittable PSFCH (PRB) transmissions of the UE.

For example, the PSD value for the common interlace and/or the common PRB, the minimum value and/or the maximum value of the PSD value may be determined based on the PSD for each PRB, which is determined when assuming a maximum number of simultaneously transmittable PSFCH (PRB) transmissions of the UE.

For example, a UE may reduce the transmit power related to the PSFCH to be mapped to the dedicated PRB by considering the power for a common interlace and/or a common RB. For example, the operation of reducing the transmit power related to the PSFCH to be mapped to the dedicated PRB may be limited to being performed when the number of the second PSFCH transmissions is 0 or determined to be less than the size of the highest priority PSFCH group. For example, the operation of reducing the transmit power related to the PSFCHs to be mapped to the dedicated PRB may be limited to being performed when the number of the second PSFCH transmissions is 0 or is determined to be less than the number of the highest priority PSFCH transmissions.

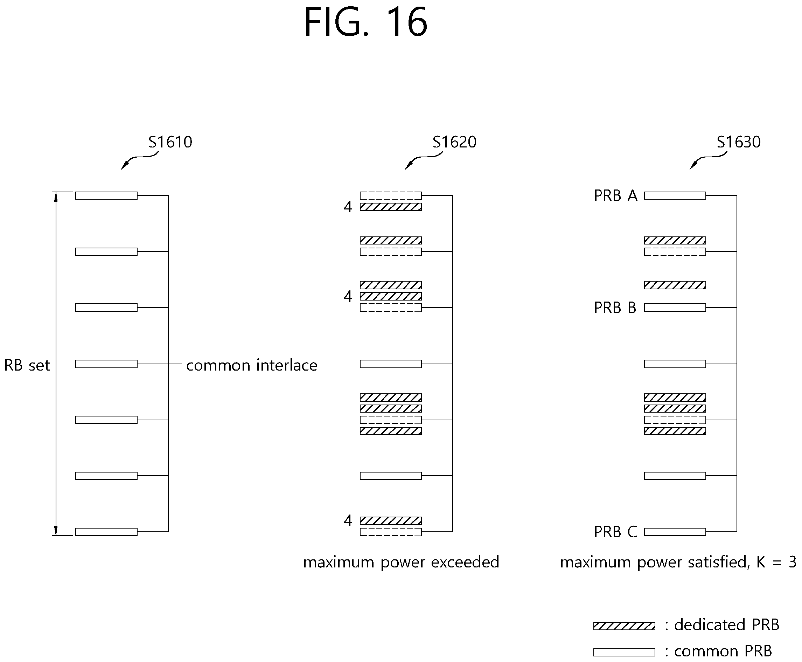

FIG. 16 shows a procedure for determining at least one dedicated PRB on which a PSFCH transmission is to be performed, considering the transmit power on a common PRB, according to one embodiment of the present disclosure. The embodiment of FIG. 16 may be combined with various embodiments of the present disclosure.

Referring to FIG. 16, each step of the procedure for determining at least one dedicated PRB on which a PSFCH transmission is to be performed, considering the transmit power on a common PRB, is shown.

In step S1610, the position of a common interlace, which is present by default in an RB set before PSFCH transmissions to be transmitted simultaneously, is shown. The common interlace may include at least one common PRB with a constant (in units of RBs) spacing.

In step S1620, PSFCH transmissions to be transmitted simultaneously may occur. The PRBs with dashed borders indicate common PRBs that are excluded from a PSFCH resource for a simultaneous PSFCH transmission because they are located within 1 MHz from a neighboring dedicated PRB, in order to satisfy the PSD requirements. Here, it is assumed that the total required power to perform the PSFCH transmission exceeds the maximum power of the UE. For example, the total required power means the sum of the total power required to transmit on the dedicated PRBs and the total power required to transmit on the common PRBs that are not excluded. For example, the lowest priority value related to the PSFCH transmissions to be simultaneously transmitted is assumed to be 4, and in step S1620 of FIG. 16, the PRBs marked with a 4 next to the PRBs indicate the PRBs to which the PSFCH transmission(s) with a priority value of 4 are mapped.

In step S1620, it is assumed that the maximum power of the UE has been exceeded, so in step S1630, according to various embodiments of the present disclosure, the UE may exclude PSFCH transmissions with the lowest priority from the simultaneous PSFCH transmission. For example, a UE may exclude (all, or some) mappings to the dedicated PRBs of PSFCH transmissions with a priority of 4, which is the lowest priority of the PSFCH transmissions to be transmitted simultaneously. In this embodiment, it is assumed that all PSFCH transmissions with the same priority are excluded at this stage.

For example, some of the common PRBs (PRB A, PRB B, and PRB C) that were excluded from the simultaneous PSFCH transmission in step S 1620, because the PSFCH transmissions are mapped to dedicated PRBs at adjacent positions, may again be included in the PSFCH resource to be used for performing the simultaneous PSFCH transmission since the dedicated PRBs to which the PSFCH transmissions are mapped at adjacent positions are removed as a result of the exclusion of the mappings to the dedicated PRBs of the PSFCH transmissions with the priority of 4 above.

For example, it is assumed that the total required power to perform the PSFCH transmission after the operation of step S1630 is performed satisfies the maximum power of the UE. The UE may perform the simultaneous PSFCH transmission based on the PSFCH resource including the dedicated PRBs and the common PRBs determined through the above procedure. For example, here, the highest priority value related to the PSFCH transmissions to be transmitted simultaneously may be 3 or less.

Alternatively, for example, the number of dedicated PRBs used for the simultaneous PSFCH transmission determined herein is 5, but the UE may select and transmit simultaneous PSFCH transmissions to be transmitted in a range greater than or equal to 5 and less than or equal to the maximum number of possible simultaneous PSFCH transmissions of the UE.

For example, after determining the transmit power and/or PSD value for the common interlace and/or common RB to use, the UE may perform transmit power control for the PSFCH or PSFCH transmission(s) (for the purpose of transmitting HARQ-ACK feedback or control information) that are to be mapped to the dedicated PRB.

For example, a UE may determine the number of PSFCH transmissions to be mapped to a dedicated interlace after determining the transmit power and/or PSD value for the common interlace and/or common RB to use.

For example, the number and transmit power of the PSFCH transmissions to be mapped to a dedicated PRB may be configured/determined such that the maximum transmit power of the UE and the transmit power for the common interlace and/or common RB and/or the difference between the above do not exceed the transmit power of the PSFCHs to be mapped to the dedicated PRB. For example, in the above, the maximum transmit power may be determined by assuming the PSFCH transmission(s) and/or common interlace and/or common RB transmission(s) to be mapped to the dedicated PRB.

For example, the number and transmit power of the PSFCH transmissions to be mapped to a dedicated PRB may be configured/determined such that the maximum transmit power of the UE does not exceed the transmit power of the PSFCH transmissions to be mapped to the dedicated PRB. For example, the number and transmit power of the PSFCH transmissions to be mapped to a dedicated PRB may be configured/determined such that the transmit power of the PSFCH transmissions to be mapped to the dedicated PRB does not exceed the transmit power for the common interlace and/or the common RB. For example, the number and transmit power of the PSFCH transmissions to be mapped to a dedicated PRB may be configured/determined by such that: the transmit power of the PSFCH transmissions to be mapped to the dedicated PRB does not exceed the difference between: i) the maximum transmit power of the UE and ii) the transmit power for the common interlace and/or common RB. For example, it may be configured/determined such that the sum of i) the number and transmit power of the PSFCH transmissions to be mapped to a dedicated PRB and ii) the transmit power for the common interlace and/or common RB do not exceed the maximum transmit power of the UE.

For example, in the above, the maximum transmit power of the UE may be determined by assuming a PSFCH transmission(s) to be mapped to a dedicated PRB and/or a common interlace and/or a common RB transmission. For example, in the above, the maximum transmit power of the UE may be determined based on the PSFCH transmission(s) to be mapped to a dedicated PRB, a common interlace, and/or a common RB transmission.

According to one embodiment of the present disclosure, a UE may determine the PSFCH transmit power and the number of PSFCH transmissions to be mapped to a dedicated PRB based on the required transmit power for a single PSFCH (PRB), the number of PSFCH transmissions to be mapped to the dedicated PRB, the number of common interlaces (common RBs), and/or the maximum transmit power of the UE. For example, a UE may determine the number of PSFCH transmissions to be mapped to a dedicated PRBs and/or calculate the transmit power for the PSFCH such that a value derived by summing the required transmit power for a single PSFCH (PRB) with $10*\log_{10}$(the sum of the number of PSFCH transmissions to be mapped to the dedicated PRBs and the number of common interlaces (common RBs)) is less than or equal to the maximum transmit power P_CMAX of the UE. For example, the units by which the number of PSFCH transmissions to be mapped to the dedicated PRB is incremented in the above procedure may be units of PSFCH groups having the same SL priority value, and/or the above procedure may be performed in such a way that larger priority values are excluded.

On the other hand, it may be necessary to adjust the transmission power when performing sidelink transmissions based on PSD requirements. For example, a UE may scale down the actual sidelink transmit power according to the PSD requirements after the sidelink transmit required power has been calculated. For example, when adjusting the sidelink transmit power according to the above PSD requirements, the PSD may be maintained for PRBs belonging to the same subchannel or the same interlace or the same RB set. For example, when adjusting the sidelink transmit power according to the above PSD requirements, the PSD may be different in units of subchannel, interlace, or RB set. For example, the PSD may be different in units of PSFCH PRBs or PSFCH transmissions when adjusting the sidelink transmit power according to the above PSD requirements.

For example, when calculating the required transmit power for a plurality of PSFCH simultaneous transmissions and the number of PSFCHs that can be transmitted simultaneously, the transmit power reduction according to the PSD requirement may be preferentially considered. For example, the number of possible or maximum PSFCH simultaneous transmissions may be higher after a UE applies the transmission power reduction according to the PSD requirements than before the UE applies the transmission power reduction according to the PSD requirements.

For example, the PSD or transmit power may be different per time domain and/or frequency domain S-SSB repetition. For example, the PSD or allocated transmit power for a specific S-SSB may be higher than the PSD or allocated transmit power for other S-SSB repetitions. For example, a UE may perform power ramping (power being increased or decreased) for frequency domain and/or time domain S-SSB repetitions. For example, the number of frequency domain repetitions for S-SSB and/or the RB spacing between repetitions may be configured such that the band between the lowest and highest subcarriers to which the actual sequence is mapped in the S-PSS and/or S-SSS symbols satisfies OCB requirements. For example, the OCB requirements may be a requirement that 80% of the channel to be occupied.

For example, if an (additional) resource for S-SSB is overlapped with a specific resource pool, the (maximum) transmit power may be determined according to the P_EMAX of the resource pool when controlling the transmit power for S-SSB.

On the other hand, the repetition of S-SSB may be performed in a structure where S-PSS and/or S-SSS are included in the S-SSB repetition, or in a structure where S-PSS and/or S-SSS are not included in the S-SSB repetition.

For example, in a situation where an S-SSB including S-PSS/S-SSS and an S-SSB not including S-PSS/S-SSS are FDMed and/or TDMed, the first PSD for the S-SSB including S-PSS/S-SSS may be different from the second PSD for the S-SSB not including S-PSS/S-SSS. For example, the first PSD may be larger than the second PSD.

For example, a maximum and/or transmit power and/or PSD may be (pre-)configured for an S-SSB that does not include an S-PSS/S-SSS. For example, the (pre-)configured transmit power and/or PSD value may be a value for the S-SSB not including the majority S-PSS/S-SSS (i.e., a value for the entire S-SSB not including the majority S-PSS/S-SSS), or may be (pre-)configured in the form of a value for each S-SSB not including the majority S-PSS/S-SSS. For example, the P_O,S-SSB value and/or alpha_S-SSB value may be different for S-SSBs that include S-PSS/S-SSS and S-SSBs that do not include S-PSS/S-SSS.

For example, the CAPC value and/or the SL priority value may be different per S-SSB occasion (per first S-SSB resource and second (additional) S-SSB resource). For example, the CAPC value and/or the SL priority value may be (separately) (pre-)configured for the second (additional) S-SSB resource. This may allow the additional resource to have a higher CAPC (or, CAPC value) considering equity with other RATs. For example, the SL priority value configured for the second resource may be used for a transmission between S-SSB and PSCCH/PSSCH and/or PSFCH. And/or, for example, the SL priority value configured for the second resource may be used for a reception priority determination. And/or, for example, when determining the priority between UL transmission and/or LTE SL transmission and reception for S-SSB transmitted on the second resource, the (pre-)configured SL priority value on the first resource may be used as the SL priority value configured on the second resource.

For example, an LBT failure (count) for the specific pool may be incremented or reported to a higher layer when an LBT fails for an S-SSB. And/or, for example, if an S-SSB belongs to a specific resource pool, or overlaps with a specific resource pool, the LBT failure (count) for that specific pool may be incremented or reported to a higher layer.

In various embodiments of the present disclosure, an RB index may be a PRB index, or may be a CRB index.

In various embodiments of the present disclosure, the methods described for each SL channel are not limited to the respective stated SL channel and may be extended and applied to different SL channels.

In various embodiments of the present disclosure, the various methods may be applied differently according to the size of the subcarrier spacing.

In various embodiments of the present disclosure, the various methods may be applied differently according to the type of sidelink channel.

In various embodiments of the present disclosure, the various methods may be applied differently according to the CAPC value and/or according to the SL priority value.

In various embodiments of the present disclosure, the various methods may be applied differently according to the RB set and/or according to the size of the RB set.

In various embodiments of the present disclosure, the various methods may be applied differently within the COT and/or outside the COT.

Various embodiments of the present disclosure may be different and/or (pre-)configured per resource pool and/or per transmission outside and/or for each of inside a resource pool and/or per QoS parameter and/or per CAPC and/or per SL priority and/or for each of inside or outside a COT (when initiating COT) and/or transmission order within MCSt and/or per SL channel type and/or RB set and/or per SL BWP and/or per SL carrier and/or congestion control level and/or per transmission operation or reception operation and/or per transmission power level and/or transmission start time point and/or channel access procedure type for a transmission and/or LBT failure ratio and/or per whether it is a COT initiator UE or a COT responded UE or the other UE and/or per cast type and/or per whether SL HARQ-ACK feedback is enabled and/or per HARQ-ACK feedback option and/or per the same information or transmission attempt count for a TB.

For example, according to an embodiment of the present disclosure, being (pre-)configured may be performed per resource pool and/or per transmission outside and/or for each of inside a resource pool and/or per QoS parameter and/or per CAPC and/or per SL priority and/or for each of inside or outside a COT (when initiating COT) and/or transmission order within MCSt and/or per SL channel type and/or RB set and/or per SL BWP and/or per SL carrier and/or congestion control level and/or per transmission operation or reception operation and/or per transmission power level and/or transmission start time point and/or channel access procedure type for a transmission and/or LBT failure ratio and/or per whether it is a COT initiator UE or a COT responded UE or the other UE and/or per cast type and/or per whether SL HARQ-ACK feedback is enabled and/or per HARQ-ACK feedback option and/or per the same information or transmission attempt count for a TB.

For example, since the number of PRBs belonging to a single interlace may be different, the number of PRBs for PSFCH transmissions may be different for different PSFCH resources. In this case, instead of using the number of PRBs for a single PSFCH resource, the total number of PRBs for PSFCH transmissions may be used for power control.

For example, the power for the PRBs on the common interlace may be determined by the sum of the power for the dedicated PRBs and the (pre-)configured offset. For example, the power allocation for the first interlace and a subset of the PRBs for a PSFCH transmission may be performed after the UE determines the power for a single PSFCH transmission, denoted by $P\_PSFCH,k(i)$, and the number of simultaneous PSFCH transmissions in the slot, denoted by $N\_(Tx,PSFCH)$.

For example, since the value of $P\_PSFCH,k(i)$ is determined based on a single RB transmission, the power allocated to the dedicated PRBs may be too small. In this case, even if a larger number of dedicated PRBs are used for a PSFCH transmission, the total power allocated to the PSFCH transmission may not increase. To mitigate this issue, both the number of PRBs for the common interlace and the number of dedicated PRBs when determining the number of simultaneous PSFCH transmissions may need to be considered. In this case, $P\_PSFCH,one$ may be used instead of $P\_(PSFCH,second)$ as the power required for a single dedicated PRB. Next, the power of a dedicated PRB or dedicated interlace may be $P\_PSFCH,k(i)$. For example, a UE may calculate the new upper limit by subtracting the power of the common interlace on a linear scale from the UE's maximum transmit power $P\_CMAX$ before determining the number of simultaneous PSFCH transmissions in the slot.

For example, a UE may determine the power for PSFCH transmissions and the number of simultaneous PSFCH transmissions, and then determine the PSFCH resources and common PRBs for the actual PSFCH transmission. In this case, when a UE performs power control for a PSFCH transmission, the UE may not know the exact subset of PRBs on the common interlace for the actual PSFCH transmission. Therefore, when a UE performs PSFCH power control, the UE may assume that all PRBs on the common interlace are transmitted, regardless of whether some are dropped due to the 1 MHz limit.

For example, for PSFCH power control considering OCB requirements, P_PSFCH,one may be the power required for a single dedicated PRB.

For example, P_PSFCH,k(i) may be the power on the dedicated PRBs for PSFCH transmission k.

For example, in a condition checking, P_CMAX may be replaced by 10 * log_10_(10^(P_CMAX/10) - 10^(P_PSFCH,first/10) * M^(PSFCH)_RB,first).

For example, P_PSFCH,first may be the PRB power on a common interlace.

For example, M^(PSFCH)_RB,first may be the number of PRBs on a common interlace.

For example, a UE may determine the number of a simultaneous PSFCH transmission on the bases of the total number of dedicated PRBs for the simultaneous PSFCH transmission.

For example, $N_{sch,Tx,PSFCH}$ may be replaced by $\sum_{k=1}^{N_{sch,Tx,PSFCH}} M_{\mathrm{RB,k}}^{\mathrm{PSFCH}}(i)$ .

For example, $\sum_{i=1}^{K} M_i$ may be replaced by $\sum_{i=1}^{K}\sum_{k=1}^{M_i} M_{\mathrm{RB,k}}^{\mathrm{PSFCH}}(i)$ .

For example, $N_{Tx,PSFCH}$ may be replaced by $\sum_{k=1}^{N_{Tx,PSFCH}} M_{\mathrm{RB,k}}^{\mathrm{PSFCH}}(i)$ .

For example, $N_{max,PSFCH}$ may be replaced by $\sum_{k=1}^{N_{max,PSFCH}} M_{\mathrm{RB,k}}^{\mathrm{PSFCH}}(i)$ .

For example, even if dl-P0-PSFCH is not provided, the power difference between each PRB on a common interlace and each PRB on a dedicated PRB may be equal to the (pre)configured offset.

For example, according to the prior art, the number of PRBs for the PSFCH transmission(s) is not considered in the PSFCH power control and determination of the number of simultaneous PSFCH transmissions. Therefore, a contradiction may arise where an increase in the number of dedicated PRBs does not increase the total power for the PSFCH transmission.

Therefore, the number of dedicated PRBs needs to be considered in the single PSFCH transmission power, the power allocation method for the PRBs on the common interlace and the determination method of the maximum transmission power of the UE considering the PRBs on the common interlace need to be defined. Otherwise, the coverage of PSFCH may not be extended regardless of the number of dedicated PRBs for PSFCH transmission.

According to one embodiment of the present disclosure, the above possible problems may be solved according to Table 15 and Table 16.

[Table 15]

| |
|---|
| 16.2.3 PSFCH |
| A UE with $N_{\mathrm{sch,Tx,PSFCH}}$ scheduled PSFCH transmissions for HARQ-ACK information and conflict information, and capable of transmitting a maximum of $N_{max,PSFCH}$ PSFCHs, determines a number $N_{\mathrm{Tx,PSFCH}}$ of simultaneous PSFCH transmissions and a power $P_{\mathrm{PSFCH,k}}(i)$ for a PSFCH transmission k, $1 \leq k \leq N_{\mathrm{Tx,PSFCH}}$, with HARQ-ACK information or conflict information on all the resource pools in PSFCH transmission occasion i on active SL BWP b of carrier $f$ as |
| $$P_{\mathrm{PSFCH,one}} = P_{\mathrm{O},PSFCH} + 10\,log_{10}(2^{\mu}) + \alpha_{PSFCH} \cdot PL \ [\mathrm{dBm}]$$ |
| - if dl-P0-PSFCH is provided, where |
| - $P_{\mathrm{O},PSFCH}$ is a value of *dl-P0-PSFCH-r17,* if using the parameter is supported by the UE and the parameter is provided;else *dl-P0-PSFCH-r16* if provided |
| - $\alpha_{PSFCH}$ is a value of *dl-Alpha-PSFCH,* if provided; else, $\alpha_{PFSCH}$ = 1 |
| - $PL = PL_{b,f,c}(q_d)$ when the active SL BWP is on a serving cell c, as described in clause 7.1.1 except that |
| - the RS resource is the one the UE uses for determining a power of a PUSCH transmission scheduled by a DCI format 0_0 in serving cell c when the UE is configured to monitor PDCCH for detection of DCI format 0_0 in serving cell c |
| - the RS resource is the one corresponding to the SS/PBCH block the UE uses to obtain MIB when the UE is not configured to monitor PDCCH for detection of DCI format 0_0 in serving cell c |
| - if $N_{\mathrm{sch,Tx,PSFCH}} \leq N_{max,PSFCH}$ |

(continued)

$$P_{\text{PSFCH,one}} + 10log_{10}\left(\sum_{k=1}^{N_{\text{sch,Tx,PSFCH}}} M_{\text{RB,k}}^{\text{PSFCH}}(i)\right) \leq 10log_{10}\left(10^{\frac{P_{\text{CMAX}}}{10}} - 10^{\frac{P_{\text{PSFCH,first}}}{10}} \cdot M_{\text{RB,firsst}}^{\text{PSFCH}}\right),$$

- if where $P_{\text{CMAX}}$ is determined for $N_{\text{sch,Tx,PSFCH}}$ PSFCH transmissions according to [8-1, TS 38101-1] and $M_{\text{RB,firsst}}^{\text{PSFCH}}$ is determined for $N_{\text{sch,Tx,PSFCH}}$ PSFCH transmissions $N_{\text{sch,Tx,PSFCH}}$

$$N_{\text{Tx,PSFCH}} = N_{\text{sch,Tx,PSFCH}} \text{ and } P_{\text{PSFCH,k}}(i) = P_{\text{PSFCH,one}} + 10log_{10}\left(M_{\text{RB,k}}^{\text{PSFCH}}(i)\right) \text{ [dBm]}$$

- else
- UE autonomously determines $N_{\text{Tx,PSFCH}}$ PSFCH transmissions first with ascending order of corresponding priority field values as described in clause 16.2.4.2 over the PSFCH transmissions with HARQ-ACK information, if any, and then with ascending order of priority value over the PSFCH transmissions with conflict information, if any, such that $N_{\text{Tx,PSFCH}} \geq \max\left(1, \sum_{i=1}^{K} M_i\right)$ where $M_i$, for $1 \leq i \leq 8$, is a number of PSFCHs with priority value i for PSFCH with HARQ-ACK information and $M_i$, for i > 8, is a number of PSFCHs with priority value i - 8 for PSFCH with conflict information and $K$ is defined as

- the largest value satisfying $P_{\text{PSFCH,one}} + 10log_{10}\left(\max\left(1, \sum_{i=1}^{K} \sum_{k=1}^{M_i} M_{\text{RB,k}}^{\text{PSFCH}}(i)\right)\right) \leq 10log_{10}\left(10^{\frac{P_{\text{CMAX}}}{10}} - \right.$

$\left. 10^{\frac{P_{\text{PSFCH,first}}}{10}} \cdot M_{\text{RB,firsst}}^{\text{PSFCH}}\right)$ where $P_{\text{CMAX}}$ is determined according to [8-1, TS 38.101-1] for transmission of all PSFCHs in $\sum_{i=1}^{K} M_i$ and $M_{\text{RB,firsst}}^{\text{PSFCH}}$ is determined for $\sum_{i=1}^{K} M_i$ PSFCH transmissions, if any
- zero, otherwise
and

$$P_{\text{PSFCH,k}}(i) = min\left(10log_{10}\left(10^{\frac{P_{\text{CMAX}}}{10}} - 10^{\frac{P_{\text{PSFCH,first}}}{10}} \cdot M_{\text{RB,firsst}}^{\text{PSFCH}}\right) - \right.$$

$$\left. 10log_{10}\left(\sum_{k=1}^{N_{\text{Tx,PSFCH}}} M_{\text{RB,k}}^{\text{PSFCH}}(i)\right), P_{\text{PSFCH,one}} + 10log_{10}\left(M_{\text{RB,k}}^{\text{PSFCH}}(i)\right)\right) \text{ [dBm]}$$

where $P_{\text{CMAX}}$ is defined in [8-1, TS 38.101-1] and is determined for the $N_{\text{Tx,PSFCH}}$ PSFCH

transmissions and $M_{\text{RB,firsst}}^{\text{PSFCH}}$ is determined for $N_{\text{Tx,PSFCH}}$ PSFCH transmissions

[Table 16]

- else
- the UE autonomously selects $N_{max,PSFCH}$ PSFCH transmissions with ascending order of corresponding priority field values as described in clause 16.2.4.2

$$P_{\text{PSFCH,one}} + 10log_{10}\left(\sum_{k=1}^{N_{\text{max,PSFCH}}} M_{\text{RB,k}}^{\text{PSFCH}}(i)\right) \leq 10log_{10}\left(10^{\frac{P_{\text{CMAX}}}{10}} - 10^{\frac{r_{\text{PSFCH,first}}}{10}} \cdot M_{\text{RB,firsst}}^{\text{PSFCH}}\right),$$

- if where $P_{\text{CMAX}}$ is determined for the $N_{max,PSFCH}$ PSFCH transmissions according to [8-1, TS 38.101-1] and $M_{\text{RB,firsst}}^{\text{PSFCH}}$ is determined for $N_{\text{max,PSFCH}}$ PSFCH transmissions

$$N_{\text{Tx,PSFCH}} = N_{\text{max,PSFCH}} \text{ and } P_{\text{PSFCH,k}}(i) = P_{\text{PSFCH,one}} + 10log_{10}\left(M_{\text{RB,k}}^{\text{PSFCH}}(i)\right) \text{ [dBm]}$$

- else
- the UE autonomously selects $N_{\text{Tx,PSFCH}}$ PSFCH transmissions in ascending order of corresponding priority field values as described in clause 16.2.4.2 over the PSFCH transmissions with HARQ-ACK information, if any, and then with ascending order of priority value over the PSFCH transmissions with conflict information, if any, such that $N_{\text{Tx,PSFCH}} \geq \max\left(1, \sum_{i=1}^{K} M_i\right)$ where $M_i$, $1 \leq i \leq 8$, is a number of PSFCHs with priority value i for PSFCH with HARQ-ACK information and $M_i$, i > 8, is a number of PSFCHs with priority value i - 8 for PSFCH with conflict information and $K$ is defined as

- the largest value satisfying $P_{\text{PSFCH,one}} + 10log_{10}\left(\max\left(1, \sum_{i=1}^{K}\sum_{k=1}^{M_i} M_{\text{RB,k}}^{\text{PSFCH}}(i)\right)\right) \leq 10log_{10}\left(10^{\frac{P_{\text{CMAX}}}{10}} - \right.$

$\left. 10^{\frac{P_{\text{PSFCH,first}}}{10}} \cdot M_{\text{RB,firsst}}^{\text{PSFCH}}\right)$ where $P_{\text{CMAX}}$ is determined according to [8-1, TS 38.101-1] for transmission of all PSFCHs in $\sum_{i=1}^{K} M_i$ , if any

- zero, otherwise

and

$$P_{\text{PSFCH,k}}(i) = min\left(10log_{10}\left(10^{\frac{P_{\text{CMAX}}}{10}} - 10^{\frac{r_{\text{PSFCH,first}}}{10}} \cdot M_{\text{RB,firsst}}^{\text{PSFCH}}\right) - \right.$$

$$\left. 10log_{10}\left(\sum_{k=1}^{N_{\text{Tx,PSFCH}}} M_{\text{RB,k}}^{\text{PSFCH}}(i)\right), P_{\text{PSFCH,one}} + 10log_{10}\left(M_{\text{RB,k}}^{\text{PSFCH}}(i)\right)\right) \text{[dBm]}$$

where $P_{\text{CMAX}}$ is determined for the $N_{\text{Tx,PSFCH}}$ simultaneous PSFCH transmissions according to [8-1, TS 38.101-1]

and $M_{\text{RB,firsst}}^{\text{PSFCH}}$ is determined for $N_{\text{Tx,PSFCH}}$ PSFCH transmissions

$$P_{\text{PSFCH,k}}(i) = 10log_{10}\left(10^{\frac{P_{\text{CMAX}}}{10}} - 10^{\frac{P_{\text{PSFCH,offset}}}{10}} \cdot M_{\text{RB,firsst}}^{\text{PSFCH}}\right) - 10log_{10}\left(\sum_{k=1}^{N_{\text{Tx,PSFCH}}} M_{\text{RB,k}}^{\text{PSFCH}}(i) + \right.$$

$$\left. M_{\text{RB,firsst}}^{\text{PSFCH}}\right) \text{[dBm]}$$

- else where the UE autonomously determines $N_{\text{Tx,PSFCH}}$ PSFCH transmissions with ascending order of corresponding priority field values as described in clause 16.2.4.2 over the PSFCH transmissions with HARQ-ACK information, if any, and then with ascending order of priority value over the PSFCH transmissions with conflict information, if any, such that $N_{\text{Tx,PSFCH}} \geq 1$ and where $P_{\text{CMAX}}$ is determined for the $N_{\text{Tx\_PSFCH}}$ PSFCH transmissions according to [8-1, TS 38.101-1] and $M_{\text{RB,firsst}}^{\text{PSFCH}}$ is determined for $N_{\text{Tx,PSFCH}}$ PSFCH transmissions.

where

- $P_{\text{PSFCH,first}} = P_{\text{PSFCH,one}} - P_{\text{PSFCH,offset}}$, where $P_{\text{PSFCH,offset}}$ is provided by *sl-PSFCH-Type2-PowerOffset,* if *sl-PSFCH-Type = 'type2';* else $P_{\text{PSFCH,first}} = 0$.

- $M_{\text{RB,firsst}}^{\text{PSFCH}}$ is the number of resource blocks in the first interlace with the index of *sl-PSFCH- Type2-CommonInterlace,* if *sl-PSFCH-Type = 'type2';* else $M_{\text{PSFCH,first}} = 0$.

- $M_{\text{RB,k}}^{\text{PSFCH}}(i)$ is the number of resource blocks of a PSFCH transmission k in PSFCH transmission occasion i.

For resource pools configured with PSFCH resources overlapping in time, the UE either expects not to be provided with *dl-P0-PSFCH* or *dl-Alpha-PSFCH* in any of the resource pools, or expects to be provided with the same values of *dl-P0-PSFCH* and the same values of *dl-Alpha-PSFCH* for all the resource pools.

For operation with shared spectrum channel access,

- if *sl-PSFCH-Type* = 'type1', a UE equally allocates power to all PRBs of an interlace used for a PSFCH transmission

- if *sl-PSFCH-Type* = 'type2', a UE allocates power to PRBs of a PSFCH transmission such that

- a power for each PRB in a subset of RRBs of a first interlace is $P_{\text{PSFCH,first}}$,

- a power for a subset of RRBs of a second interlace is $P_{\text{PSFCH,k}}(i)$.

For example, in PSFCH power control, when a PSFCH is mapped to an interlace, the number of PRBs comprising the interlace may be a reference value that is independent of the actual number of PRBs. For example, the reference value may always be fixed at 10 or 11. And/or, for example, the reference value may inherit a reference value for the number of PRBs comprising an interlace that is used in the TBS calculation for the RB-based PSSCH of the interlace.

For example, the number of PRBs in a common interlace in the above may be the total number of PRBs in the interlace, or it may be the number of PRBs in the set of PSFCH transmission resources among the PRBs belonging to the interlace, or it may be the number of PRBs actually scheduled to be transmitted (according to the determination of whether to transmit common PRBs), according to the combination of PSFCH resources to be transmitted.

For example, when a UE determines the maximum power value and the number of PSFCH transmissions, the number of PSFCH transmissions assumed in the middle and the number of PRBs in an expected common interlace according to the set of PSFCH resources for those transmissions may be used. For example, in accordance with various embodiments of the present disclosure, common PRBs with a PRB gap difference of 1 MHz or equivalent from each dedicated PRB according to the set of dedicated PRBs determined according to the PSFCH resources in the procedure of selecting a PSFCH resource to be transmitted by a UE may be excluded from the transmission resources, in which case the excluded common PRBs may not be used/considered for PSFCH power control.

For example, if the DL nominal power is not configured, the difference between the power for common PRBs and the power for dedicated PRBs may not guarantee the (pre-)configured offset value when controlling PSFCH power. For example, if the nominal power is not configured, the difference between the power for the common PRB and the power for the dedicated PRB may not be equal during PSFCH power control.

For example, a UE may select N_Tx,PSFCH PSFCH transmissions, in ascending order of the value of the priority field in the HARQ-ACK information included in each of the PSFCH transmissions corresponding to each of the N_Tx,PSFCH transmissions. Here, it may be a greater value among N_Tx,PSFCH $\geq$ 1 or (M_1 + M_2 + ... + M_i + ... + M_K), i may be a priority value for the PSFCH that includes the HARQ-ACK information. For example, K may be the greatest value that satisfies P_PSFCH,one + $10\log_{10}$ (N_K_PSFCH,one) $\leq$ P_CMAX. Here, P_CMAX may be determined according to all PSFCH transmissions in (M_1 + M_2 + ... + M_i + ... + M_K).

For example, it may be N_K_PSFCH,one = (a greater value among 1 or (M_1 + M_2 + ... + M_i + ... + M_K)) * N_interlace2_PSFCH,one + N_interlace1,K_PSFCH,one * $10^{\wedge}$(-P_PSFCH,offset/10), and N_interlace1,K_PSFCH,one may be the number of PRBs within a first interlace (common interlace), for (M_1 + M_2 + ... + M_i + ... + M_K) PSFCH transmissions after excluding common PRBs within 1MHz from a dedicated PRB.

For example, a PRB with index s1 in a first interlace may be excluded from a resource for a PSFCH transmission if the absolute value of s1-s2 is 5 or less and u=0, or if the absolute value of s1-s2 is 2 or less and u=1. Here, the PRB with index s2 may be a PRB that is included in the PRB subset selected for a PSFCH transmission. Where, for example, assuming that the PRB with index s1 is excluded, s_high-s_low may be 88 or greater for u=0, or s_high-s_low may be 44 or greater for u=1. Here, s_high and s_low may be the highest and lowest PRB indices among the resources for a PSFCH transmission, respectively.

In order to obtain a transmission opportunity in an unlicensed band, a channel access procedure (CAP) may be performed, and as an operation related to the CAP, a channel sensing operation for a resource may be performed. For example, a UE may perform channel sensing on a channel sensing window starting from a time point earlier than the time point of the transmission resource by the length of the channel sensing window, and only use the resource to perform transmission if the result is idle.

For example, in communication on a shared spectrum, OCB and PSD requirements may need to be satisfied, and a common interlace may be used in the SL-U for the OCB requirement. For example, the common interlace may be labeled as a first interlace, or may be interchangeable/substitutable with the first interlace. According to the prior art, considering the amount of power allocated to the common PRBs comprising the common interlace, there is a problem of unresolved ambiguity as to how to determine the number of PSFCHs to be simultaneously transmitted by a UE to fulfill the OCB and PSD requirements.

For example, when a PSFCH transmission is performed on a shared spectrum, the PSFCH transmission may be performed through a dedicated interlace. The dedicated interlace may be denoted as a second interlace, or may be interchangeable/substitutable with the second interlace. The dedicated interlace may comprise a plurality of dedicated PRBs.

According to one embodiment of the present disclosure, when a UE requires a plurality of PSFCH transmissions, the UE may determine and transmit N PSFCHs by considering the priority of the HARQ-ACK information transmitted through a dedicated interlace over which the maximum transmit power of the UE and the practical HARQ-ACK information may be delivered. Here, for example, a PRB on a common interlace (i.e., a common PRB) may be considered when determining whether the above maximum transmit power is exceeded, and the common PRB may be determined differently according to the PSFCHs to be transmitted (or, the time/frequency position of the PSFCHs).

For example, after the power allocated to the common PRB is determined, the number of dedicated PRBs and/or the number of PSFCH transmissions may be determined based on the remaining power after subtracting the power allocated to the common PRB from P_CMAX.

According to one embodiment of the present disclosure, the maximum number of PSFCHs with high priority may be transmitted while satisfying the OCB requirements, the maximum transmit power of a UE, and the maximum number of simultaneous transmissions for PSFCHs of a UE by utilizing a common PRB included in a common interlace structure. Further, according to embodiments of the present disclosure, the ambiguity of the order of power allocation for the common PRB and the determination of the number of PSFCH transmissions may be resolved in the operation of simultaneous PSFCH transmissions on a shared spectrum.

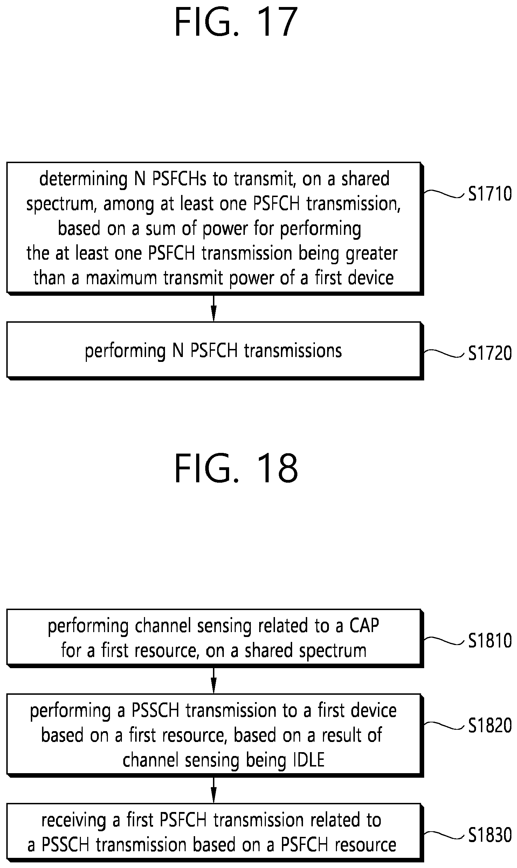

FIG. 17 shows a procedure for a first device to perform wireless communication, according to one embodiment of the present disclosure. The embodiment of FIG. 17 may be combined with various embodiments of the present disclosure.

Referring to FIG. 17, in step S1710, a first device may determine N physical sidelink feedback channels (PSFCHs) to transmit, on a shared spectrum, among at least one PSFCH transmission, based on a sum of power for performing the at least one PSFCH transmission being greater than a maximum transmit power of the first device. For example, the N may be an integer that satisfies $N_1 \leq N \leq N_{MAX}$, the $N_1$ may be a number of a plurality of PSFCH transmissions with priority values less than or equal to a first priority value, and the $N_{MAX}$ may be a maximum number of PSFCH transmissions of the first device, the first priority value may be a largest priority value such that a total transmit power related to the plurality of PSFCH transmissions does not exceed the maximum transmit power, and the total transmit power may include transmit power of a transmission on at least one first physical resource block (PRB), which is determined based on the plurality of PSFCH transmissions, within a first interlace and transmit power of a transmission on at least one second PRB, on which the plurality of PSFCH transmissions are performed, within a second interlace. In step S1720, the first device may perform the N PSFCH transmissions.

For example, the first interlace may be a common interlace.

For example, the at least one first PRB may be at least one common PRB.

For example, the at least one first PRB may be determined based on a frequency domain position of the at least one second PRB.

For example, the at least one first PRB may be determined by excluding a PRB positioned within 1 MHz from the at least one second PRB.

For example, the second interlace may be a dedicated interlace.

For example, the total transmit power may be determined based on power related to a single PSFCH transmission, a number of the at least one first PRB, and a number of the at least one second PRB.

For example, the N PSFCH transmissions may be transmitted based on a PSFCH resource, and the PSFCH resource may include the at least one first PRB and the at least one second PRB.

For example, additionally, the first device may perform channel sensing for a channel access procedure (CAP) for the PSFCH resource. For example, the N PSFCH transmission may be performed based on a result of the channel sensing being IDLE.

For example, a bandwidth between a highest frequency and a lowest frequency among frequencies of subcarriers related to the PSFCH resource may be greater than or equal to 80% of a bandwidth of an RB set within which the PSFCH resource is included.

For example, the maximum transmit power may be determined based on a number of the at least one second PRB.

For example, the maximum transmit power may be determined based on the NMAX.

For example, the N PSFCH transmission may be performed within a channel occupancy time (COT) duration.

The embodiments described above may be applied to various devices described below. For example, a processor 102 of a first device 100 may determine N physical sidelink feedback channels (PSFCHs) to transmit, on a shared spectrum, among at least one PSFCH transmission, based on a sum of power for performing the at least one PSFCH transmission being greater than a maximum transmit power of the first device 100. For example, the N may be an integer that satisfies $N_1 \leq N \leq N_{MAX}$, the $N_1$ may be a number of a plurality of PSFCH transmissions with priority values less than or equal to a first priority value, and the $N_{MAX}$ may be a maximum number of PSFCH transmissions of the first device 100, the first priority value may be a largest priority value such that a total transmit power related to the plurality of PSFCH transmissions does not exceed the maximum transmit power, and the total transmit power may include transmit power of a transmission on at least one first physical resource block (PRB), which is determined based on the plurality of PSFCH transmissions, within a first interlace and transmit power of a transmission on at least one second PRB, on which the plurality of PSFCH transmissions are performed, within a second interlace. And, the processor 102 of the first device 100 may control a transceiver 106 to perform the N PSFCH transmissions.

According to an embodiment of the present disclosure, a first device for performing wireless communication may be proposed. For example, the first device may comprise: at least one transceiver; at least one processor; and at least one memory operably connected to the at least one processor and storing instructions that, based on being executed by the at least one processor, cause the first device to perform operations. For example, the operations may comprise: determining N physical sidelink feedback channels (PSFCHs) to transmit, on a shared spectrum, among at least one PSFCH transmission, based on a sum of power for performing the at least one PSFCH transmission being greater than a maximum transmit power of the first device, wherein the N may be an integer that satisfies $N_1 \leq N \leq N_{MAX}$, the $N_1$ may be a number of a plurality of PSFCH transmissions with priority values less than or equal to a first priority value, and the $N_{MAX}$ may be a maximum number of PSFCH transmissions of the first device, wherein the first priority value may be a largest priority value such that a total transmit power related to the plurality of PSFCH transmissions does not exceed the maximum transmit power, and wherein the total transmit power may include transmit power of a transmission on at least one first physical resource block (PRB), which is determined based on the plurality of PSFCH transmissions, within a first interlace and transmit power of a transmission on at least one second PRB, on which the plurality of PSFCH transmissions are performed, within a second interlace; and performing the N PSFCH transmissions.

For example, the first interlace may be a common interlace.

For example, the at least one first PRB may be at least one common PRB.

For example, the at least one first PRB may be determined based on a frequency domain position of the at least one second PRB.

For example, the at least one first PRB may be determined by excluding a PRB positioned within 1 MHz from the at least one second PRB.

For example, the second interlace may be a dedicated interlace.

For example, the total transmit power may be determined based on power related to a single PSFCH transmission, a number of the at least one first PRB, and a number of the at least one second PRB.

For example, the N PSFCH transmissions may be transmitted based on a PSFCH resource, and the PSFCH resource may include the at least one first PRB and the at least one second PRB.

For example, additionally, the operations may comprise: performing channel sensing for a channel access procedure (CAP) for the PSFCH resource. For example, the N PSFCH transmission may be performed based on a result of the channel sensing being IDLE.

For example, a bandwidth between a highest frequency and a lowest frequency among frequencies of subcarriers related to the PSFCH resource may be greater than or equal to 80% of a bandwidth of an RB set within which the PSFCH resource is included.

For example, the maximum transmit power may be determined based on a number of the at least one second PRB.

For example, the maximum transmit power may be determined based on the NMAX.

For example, the N PSFCH transmission may be performed within a channel occupancy time (COT) duration.

According to an embodiment of the present disclosure, a device adapted to control a first user equipment (UE) may be proposed. For example, the device may comprise: at least one processor; and at least one memory operably connected to the at least one processor and storing instructions that, based on being executed by the at least one processor, cause the first UE to perform operations. For example, the operations may comprise: determining N physical sidelink feedback channels (PSFCHs) to transmit, on a shared spectrum, among at least one PSFCH transmission, based on a sum of power for performing the at least one PSFCH transmission being greater than a maximum transmit power of the first UE, wherein the N may be an integer that satisfies $N_1 \leq N \leq N_{MAX}$, the $N_1$ may be a number of a plurality of PSFCH transmissions with priority values less than or equal to a first priority value, and the $N_{MAX}$ may be a maximum number of PSFCH transmissions of the first UE, wherein the first priority value may be a largest priority value such that a total transmit power related to the plurality of PSFCH transmissions does not exceed the maximum transmit power, and wherein the total transmit power may include transmit power of a transmission on at least one first physical resource block (PRB), which is determined based on the plurality of PSFCH transmissions, within a first interlace and transmit power of a transmission on at least one second PRB, on which the plurality of PSFCH transmissions are performed, within a second interlace; and performing the N PSFCH transmissions.

According to an embodiment of the present disclosure, a non-transitory computer-readable storage medium storing instructions may be proposed. For example, the instructions, based on being executed, may cause a first device to: determine N physical sidelink feedback channels (PSFCHs) to transmit, on a shared spectrum, among at least one PSFCH transmission, based on a sum of power for performing the at least one PSFCH transmission being greater than a maximum transmit power of the first device, wherein the N may be an integer that satisfies $N_1 \leq N \leq N_{MAX}$, the $N_1$ may be a number of a plurality of PSFCH transmissions with priority values less than or equal to a first priority value, and the $N_{MAX}$ may be a maximum number of PSFCH transmissions of the first device, wherein the first priority value may be a largest priority value such that a total transmit power related to the plurality of PSFCH transmissions does not exceed the maximum transmit power, and wherein the total transmit power may include transmit power of a transmission on at least one first physical resource block (PRB), which is determined based on the plurality of PSFCH transmissions, within a first interlace and transmit power of a transmission on at least one second PRB, on which the plurality of PSFCH transmissions are performed, within a second interlace; and perform the N PSFCH transmissions.

FIG. 18 shows a procedure for a second device to perform wireless communication, according to one embodiment of the present disclosure. The embodiment of FIG. 18 may be combined with various embodiments of the present disclosure.

Referring to FIG. 18, in step S1810, a second device may perform channel sensing related to a channel access procedure (CAP) for a first resource, on a shared spectrum. In step S1820, the second device may perform a physical sidelink shared channel (PSSCH) transmission to a first device based on the first resource, based on a result of the channel sensing being IDLE. In step S1830, the second device may receive a first physical sidelink feedback channel (PSFCH) transmission related to the PSSCH transmission based on a PSFCH resource. For example, the first PSFCH transmission may be included in N PSFCH transmissions, the N PSFCH transmissions may be determined among at least one PSFCH transmission, based on a sum of power for performing the at least one PSFCH transmission being greater than a maximum transmit power of the first device, the N may be an integer that satisfies $N_1 \leq N \leq N_{MAX}$, the $N_1$ may be a number of a plurality of PSFCH transmissions with priority values less than or equal to a first priority value, and the $N_{MAX}$ may be a maximum number of PSFCH transmissions of the first device, the first priority value may be a largest priority value such that a total transmit power related to the plurality of PSFCH transmissions does not exceed the maximum transmit power, and the total transmit power may include transmit power of a transmission on at least one first physical resource block (PRB), which is determined based on the plurality of PSFCH transmissions, within a first interlace and transmit power of a transmission on at least one second PRB, on which the plurality of PSFCH transmissions are performed, within a second interlace.

For example, the at least one first PRB may be determined by excluding a PRB positioned within 1 MHz from the at least one second PRB.

The embodiments described above may be applied to various devices described below. For example, a processor 202 of a second device 200 may perform channel sensing related to a channel access procedure (CAP) for a first resource, on a shared spectrum. And, the processor 202 of the second device 200 may control a transceiver 206 to perform a physical sidelink shared channel (PSSCH) transmission to a first device 100 based on the first resource, based on a result of the channel sensing being IDLE. And, the processor 202 of the second device 200 may control the transceiver 206 to receive a first physical sidelink feedback channel (PSFCH) transmission related to the PSSCH transmission based on a PSFCH resource. For example, the first PSFCH transmission may be included in N PSFCH transmissions, the N PSFCH transmissions may be determined among at least one PSFCH transmission, based on a sum of power for performing the at least one PSFCH transmission being greater than a maximum transmit power of the first device, the N may be an integer that satisfies $N_1 \leq N \leq N_{MAX}$, the $N_1$ may be a number of a plurality of PSFCH transmissions with priority values less than or equal to a first priority value, and the $N_{MAX}$ may be a maximum number of PSFCH transmissions of the first device 100, the first priority value may be a largest priority value such that a total transmit power related to the plurality of PSFCH transmissions does not exceed the maximum transmit power, and the total transmit power may include transmit power of a transmission on at least one first physical resource block (PRB), which is determined based on the plurality of PSFCH transmissions, within a first interlace and transmit power of a transmission on at least one second PRB, on which the plurality of PSFCH transmissions are performed, within a second interlace.

According to an embodiment of the present disclosure, a second device for performing wireless communication may be proposed. For example, the second device may comprise: at least one transceiver; at least one processor; and at least one memory operably connected to the at least one processor and storing instructions that, based on being executed by the at least one processor, cause the second device to perform operations. For example, the operations may comprise: performing channel sensing related to a channel access procedure (CAP) for a first resource, on a shared spectrum; performing a physical sidelink shared channel (PSSCH) transmission to a first device based on the first resource, based on a result of the channel sensing being IDLE; and receiving a first physical sidelink feedback channel (PSFCH) transmission related to the PSSCH transmission based on a PSFCH resource, wherein the first PSFCH transmission may be included in N PSFCH transmissions, wherein the N PSFCH transmissions may be determined among at least one PSFCH transmission, based on a sum of power for performing the at least one PSFCH transmission being greater than a maximum transmit power of the first device, wherein the N may be an integer that satisfies $N_1 \leq N \leq N_{MAX}$, the $N_1$ may be a number of a plurality of PSFCH transmissions with priority values less than or equal to a first priority value, and the $N_{MAX}$ may be a maximum number of PSFCH transmissions of the first device, wherein the first priority value may be a largest priority value such that a total transmit power related to the plurality of PSFCH transmissions does not exceed the maximum transmit power, and wherein the total transmit power may include transmit power of a transmission on at least one first physical resource block (PRB), which is determined based on the plurality of PSFCH transmissions, within a first interlace and transmit power of a transmission on at least one second PRB, on which the plurality of PSFCH transmissions are performed, within a second interlace.

For example, the at least one first PRB may be determined by excluding a PRB positioned within 1 MHz from the at least one second PRB.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

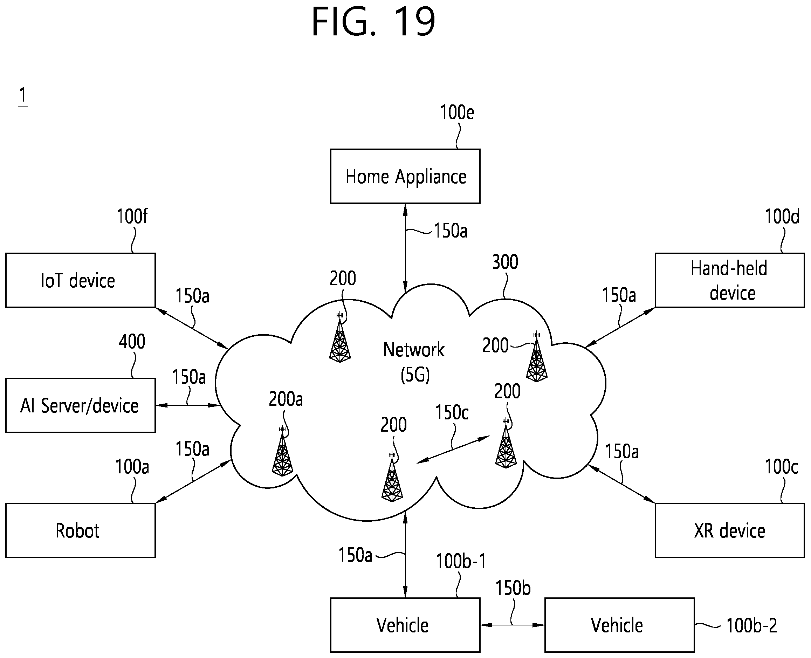

FIG. 19 shows a communication system 1, based on an embodiment of the present disclosure. The embodiment of FIG. 19 may be combined with various embodiments of the present disclosure.

Referring to FIG. 19, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

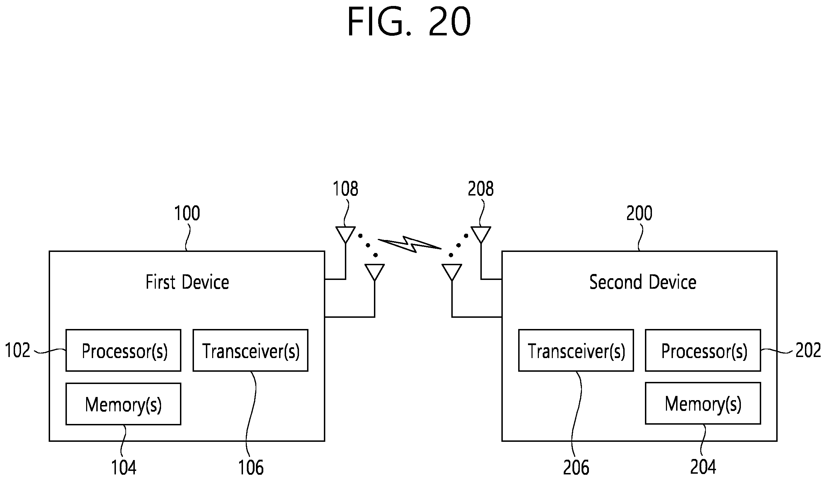

FIG. 20 shows wireless devices, based on an embodiment of the present disclosure. The embodiment of FIG. 20 may be combined with various embodiments of the present disclosure.

Referring to FIG. 20, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 19.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

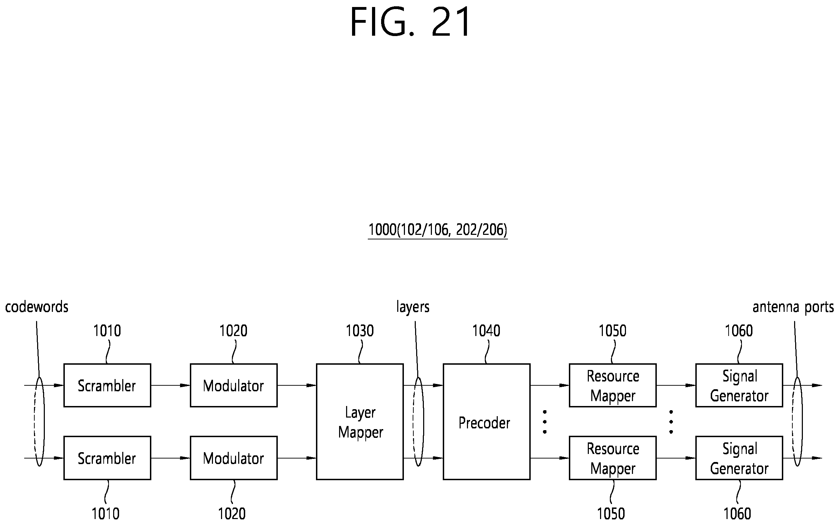

FIG. 21 shows a signal process circuit for a transmission signal, based on an embodiment of the present disclosure. The embodiment of FIG. 21 may be combined with various embodiments of the present disclosure.

Referring to FIG. 21, a signal processing circuit 1000 may include scramblers 1010, modulators 1020, a layer mapper 1030, a precoder 1040, resource mappers 1050, and signal generators 1060. An operation/function of FIG. 21 may be performed, without being limited to, the processors 102 and 202 and/or the transceivers 106 and 206 of FIG. 20. Hardware elements of FIG. 21 may be implemented by the processors 102 and 202 and/or the transceivers 106 and 206 of FIG. 20. For example, blocks 1010 to 1060 may be implemented by the processors 102 and 202 of FIG. 20. Alternatively, the blocks 1010 to 1050 may be implemented by the processors 102 and 202 of FIG. 20 and the block 1060 may be implemented by the transceivers 106 and 206 of FIG. 20.

Codewords may be converted into radio signals via the signal processing circuit 1000 of FIG. 21. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 21. For example, the wireless devices (e.g., 100 and 200 of FIG. 20) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

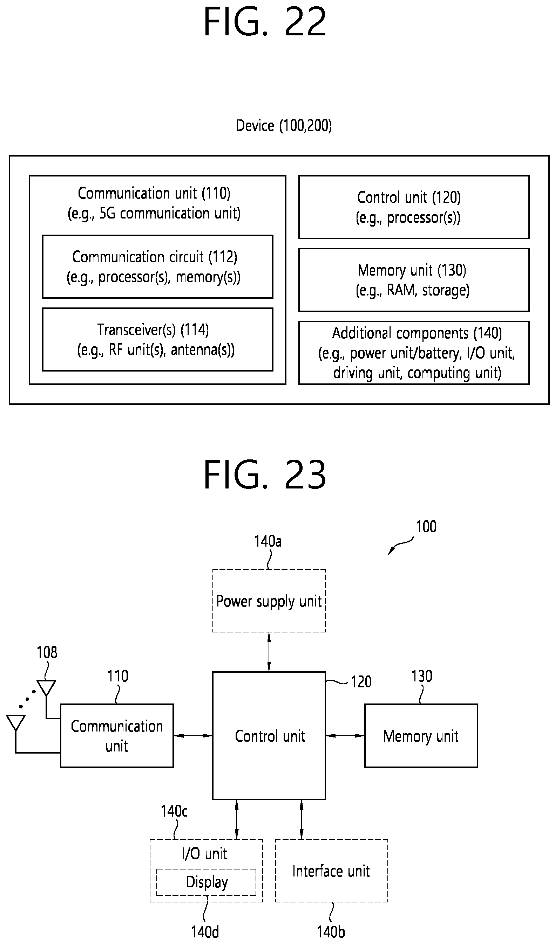

FIG. 22 shows another example of a wireless device, based on an embodiment of the present disclosure. The wireless device may be implemented in various forms according to a use-case/service (refer to FIG. 19). The embodiment of FIG. 22 may be combined with various embodiments of the present disclosure.

Referring to FIG. 22, wireless devices 100 and 200 may correspond to the wireless devices 100 and 200 of FIG. 20 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 20. For example, the transceiver(s) 114 may include the one or more transceivers 106 and 206 and/or the one or more antennas 108 and 208 of FIG. 20. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 19), the vehicles (100b-1 and 100b-2 of FIG. 19), the XR device (100c of FIG. 19), the hand-held device (100d of FIG. 19), the home appliance (100e of FIG. 19), the IoT device (100f of FIG. 19), a digital broadcast terminal, a hologram device, a public safety device, an MTC device, a medicine device, a fintech device (or a finance device), a security device, a climate/environment device, the AI server/device (400 of FIG. 19), the BSs (200 of FIG. 19), a network node, etc. The wireless device may be used in a mobile or fixed place according to a use-example/service.

In FIG. 22, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 22 will be described in detail with reference to the drawings.

FIG. 23 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 23 may be combined with various embodiments of the present disclosure.

Referring to FIG. 23, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 22, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/-signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

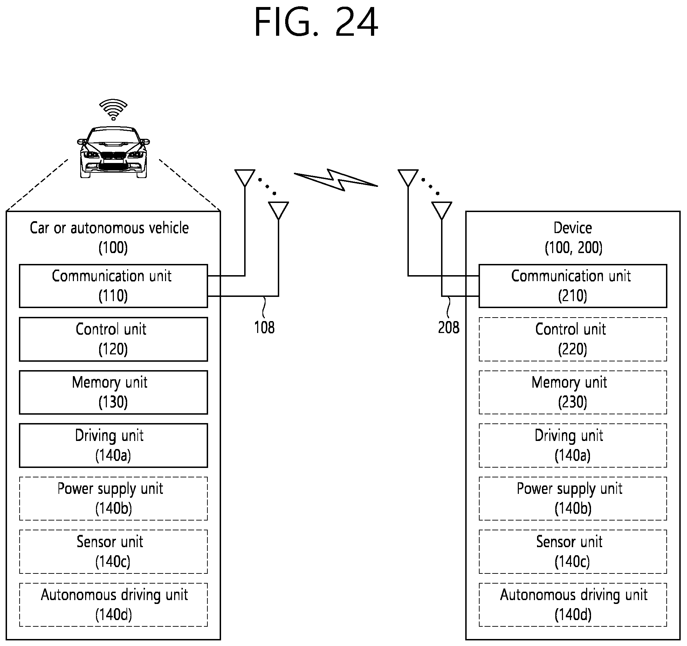

FIG. 24 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 24 may be combined with various embodiments of the present disclosure.

Referring to FIG. 24, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 22, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

**Claims**

1.  A method for performing, by a first device, wireless communication, the method comprising:

    determining N physical sidelink feedback channels (PSFCHs) to transmit, on a shared spectrum, among at least one PSFCH transmission, based on a sum of power for performing the at least one PSFCH transmission being greater than a maximum transmit power of the first device,
    wherein the N is an integer that satisfies $N_1 \leq N \leq N_{MAX}$, the $N_1$ is a number of a plurality of PSFCH transmissions with priority values less than or equal to a first priority value, and the $N_{MAX}$ is a maximum number of PSFCH transmissions of the first device,
    wherein the first priority value is a largest priority value such that a total transmit power related to the plurality of PSFCH transmissions does not exceed the maximum transmit power, and
    wherein the total transmit power includes transmit power of a transmission on at least one first physical resource block (PRB), which is determined based on the plurality of PSFCH transmissions, within a first interlace and transmit power of a transmission on at least one second PRB, on which the plurality of PSFCH transmissions are performed, within a second interlace; and
performing the N PSFCH transmissions.

2. The method of claim 1, wherein the first interlace is a common interlace.

3. The method of claim 2, wherein the at least one first PRB is at least one common PRB.

4. The method of claim 1, wherein the at least one first PRB is determined based on a frequency domain position of the at least one second PRB.

5. The method of claim 4, wherein the at least one first PRB is determined by excluding a PRB positioned within 1 MHz from the at least one second PRB.

6. The method of claim 1, wherein the second interlace is a dedicated interlace.

7. The method of claim 1, wherein the total transmit power is determined based on power related to a single PSFCH transmission, a number of the at least one first PRB, and a number of the at least one second PRB.

8. The method of claim 1, wherein the N PSFCH transmissions are transmitted based on a PSFCH resource, and wherein the PSFCH resource includes the at least one first PRB and the at least one second PRB.

9. The method of claim 8, further comprising:

   performing channel sensing for a channel access procedure (CAP) for the PSFCH resource,
   wherein the N PSFCH transmission is performed based on a result of the channel sensing being IDLE.

10. The method of claim 8, wherein a bandwidth between a highest frequency and a lowest frequency among frequencies of subcarriers related to the PSFCH resource is greater than or equal to 80% of a bandwidth of an RB set within which the PSFCH resource is included.

11. The method of claim 1, wherein the maximum transmit power is determined based on a number of the at least one second PRB.

12. The method of claim 1, wherein the maximum transmit power is determined based on the NMAX.

13. The method of claim 1, wherein the N PSFCH transmission are performed within a channel occupancy time (COT) duration.

14. A first device for performing wireless communication, the first device comprising:

   at least one transceiver;
   at least one processor; and
   at least one memory operably connected to the at least one processor and storing instructions that, based on being executed by the at least one processor, cause the first device to perform operations,
   wherein the operations comprise:

   determining N physical sidelink feedback channels (PSFCHs) to transmit, on a shared spectrum, among at least one PSFCH transmission, based on a sum of power for performing the at least one PSFCH transmission being greater than a maximum transmit power of the first device,
   wherein the N is an integer that satisfies $N_1 \leq N \leq N_{MAX}$, the $N_1$ is a number of a plurality of PSFCH transmissions with priority values less than or equal to a first priority value, and the $N_{MAX}$ is a maximum number of PSFCH transmissions of the first device,
   wherein the first priority value is a largest priority value such that a total transmit power related to the plurality of PSFCH transmissions does not exceed the maximum transmit power, and
   wherein the total transmit power includes transmit power of a transmission on at least one first physical resource block (PRB), which is determined based on the plurality of PSFCH transmissions, within a first interlace and transmit power of a transmission on at least one second PRB, on which the plurality of PSFCH transmissions are performed, within a second interlace; and
performing the N PSFCH transmissions.

15. A device adapted to control a first user equipment (UE), the device comprising:

at least one processor; and
at least one memory operably connected to the at least one processor and storing instructions that, based on being executed by the at least one processor, cause the first UE to perform operations, wherein the operations comprise:

determining N physical sidelink feedback channels (PSFCHs) to transmit, on a shared spectrum, among at least one PSFCH transmission, based on a sum of power for performing the at least one PSFCH transmission being greater than a maximum transmit power of the first UE,
wherein the N is an integer that satisfies $N_1 \leq N \leq N_{MAX}$, the $N_1$ is a number of a plurality of PSFCH transmissions with priority values less than or equal to a first priority value, and the $N_{MAX}$ is a maximum number of PSFCH transmissions of the first UE,
wherein the first priority value is a largest priority value such that a total transmit power related to the plurality of PSFCH transmissions does not exceed the maximum transmit power, and
wherein the total transmit power includes transmit power of a transmission on at least one first physical resource block (PRB), which is determined based on the plurality of PSFCH transmissions, within a first interlace and transmit power of a transmission on at least one second PRB, on which the plurality of PSFCH transmissions are performed, within a second interlace; and
performing the N PSFCH transmissions.

16. A non-transitory computer-readable storage medium storing instructions that, based on being executed, cause a first device to:

determine N physical sidelink feedback channels (PSFCHs) to transmit, on a shared spectrum, among at least one PSFCH transmission, based on a sum of power for performing the at least one PSFCH transmission being greater than a maximum transmit power of the first device,
wherein the N is an integer that satisfies $N_1 \leq N \leq N_{MAX}$, the $N_1$ is a number of a plurality of PSFCH transmissions with priority values less than or equal to a first priority value, and the $N_{MAX}$ is a maximum number of PSFCH transmissions of the first device,
wherein the first priority value is a largest priority value such that a total transmit power related to the plurality of PSFCH transmissions does not exceed the maximum transmit power, and
wherein the total transmit power includes transmit power of a transmission on at least one first physical resource block (PRB), which is determined based on the plurality of PSFCH transmissions, within a first interlace and transmit power of a transmission on at least one second PRB, on which the plurality of PSFCH transmissions are performed, within a second interlace; and
perform the N PSFCH transmissions.

17. A method for performing, by a second device, wireless communication, the method comprising:

performing channel sensing related to a channel access procedure (CAP) for a first resource, on a shared spectrum;
performing a physical sidelink shared channel (PSSCH) transmission to a first device based on the first resource, based on a result of the channel sensing being IDLE; and
receiving a first physical sidelink feedback channel (PSFCH) transmission related to the PSSCH transmission based on a PSFCH resource,
wherein the first PSFCH transmission is included in N PSFCH transmissions,
wherein the N PSFCH transmissions are determined among at least one PSFCH transmission, based on a sum of power for performing the at least one PSFCH transmission being greater than a maximum transmit power of the first device,
wherein the N is an integer that satisfies $N_1 \leq N \leq N_{MAX}$, the $N_1$ is a number of a plurality of PSFCH transmissions with priority values less than or equal to a first priority value, and the $N_{MAX}$ is a maximum number of PSFCH transmissions of the first device,
wherein the first priority value is a largest priority value such that a total transmit power related to the plurality of PSFCH transmissions does not exceed the maximum transmit power, and

wherein the total transmit power includes transmit power of a transmission on at least one first physical resource block (PRB), which is determined based on the plurality of PSFCH transmissions, within a first interlace and transmit power of a transmission on at least one second PRB, on which the plurality of PSFCH transmissions are performed, within a second interlace.

18. The method of claim 17, wherein the at least one first PRB is determined by excluding a PRB positioned within 1 MHz from the at least one second PRB.

19. A second device for performing wireless communication, the second device comprising:

at least one transceiver;
at least one processor; and
at least one memory operably connected to the at least one processor and storing instructions that, based on being executed by the at least one processor, cause the second device to perform operations,
wherein the operations comprise:

performing channel sensing related to a channel access procedure (CAP) for a first resource, on a shared spectrum;
performing a physical sidelink shared channel (PSSCH) transmission to a first device based on the first resource, based on a result of the channel sensing being IDLE; and
receiving a first physical sidelink feedback channel (PSFCH) transmission related to the PSSCH transmission based on a PSFCH resource,
wherein the first PSFCH transmission is included in N PSFCH transmissions,
wherein the N PSFCH transmissions are determined among at least one PSFCH transmission, based on a sum of power for performing the at least one PSFCH transmission being greater than a maximum transmit power of the first device,
wherein the N is an integer that satisfies $N_1 \leq N \leq N_{MAX}$, the $N_1$ is a number of a plurality of PSFCH transmissions with priority values less than or equal to a first priority value, and the $N_{MAX}$ is a maximum number of PSFCH transmissions of the first device,
wherein the first priority value is a largest priority value such that a total transmit power related to the plurality of PSFCH transmissions does not exceed the maximum transmit power, and
wherein the total transmit power includes transmit power of a transmission on at least one first physical resource block (PRB), which is determined based on the plurality of PSFCH transmissions, within a first interlace and transmit power of a transmission on at least one second PRB, on which the plurality of PSFCH transmissions are performed, within a second interlace.

20. The second device of claim 19, wherein the at least one first PRB is determined by excluding a PRB positioned within 1 MHz from the at least one second PRB.

# FIG. 1

FIG. 2

# FIG. 3

# FIG. 4

(a)

(b)

(c)

PC5-U

(d)

PC5-C

# FIG. 5

# FIG. 6

Resource grid

A carrier
(up to 3300 subcarriers,
i.e., 275 RBs)

A BWP

1RB=12 subcarriers

1 RE

1subcarrier

1 symbol

l=0 ・・・

k=0

EP 4 642 110 A1

# FIG. 7

PRB N3

PRB 1

PRB 0

$N_{BWP, 2}^{size}$

PRB N2

PRB 1

PRB 0

$N_{BWP, 1}^{size}$

Carrier
Bandwidth

PRB N1

PRB 1

PRB 0

$N_{BWP, 0}^{size}$

$N_{BWP, 2}^{start}$

$N_{BWP, 1}^{start}$

CRB 0

$N_{BWP, 0}^{start}$

Freq.

Time

PRB 0 (Point A) in reference resource block

# FIG. 8

(a)

(b)

# FIG. 9

(a)

(b)

(c)

● : TX UE

⊘ : RX UE

# FIG. 10

(a) Carrier aggregation between L-band and U-band

(b) Standalone U-band(s)

# FIG. 11

# FIG. 12

# FIG. 13

CAP start — S110

Step 1 — S120

Step 4 — S130
YES → CAP ends — S132 → Performing transmission — S134
NO

Step 2 — S140

Step 3 — S150
YES
NO

Step 5 — S160

Step 6 — S170
NO
YES

EP 4 642 110 A1

# FIG. 14

CAP start — S210

Step 1 — S220

Step 4 — S230

YES → CAP ends — S232 → Performing transmission — S234

NO

Step 2 — S240

Step 3 — S250

YES

NO

Step 5 — S260

Step 6 — S270

NO

YES

EP 4 642 110 A1

# FIG. 15

# FIG. 16

S1610

RB set     common interlace

S1620

4

4

4

maximum power exceeded

S1630

PRB A

PRB B

PRB C

maximum power satisfied, K = 3

▨▨▨ : dedicated PRB

▭ : common PRB

EP 4 642 110 A1

# FIG. 17

determining N PSFCHs to transmit, on a shared spectrum, among at least one PSFCH transmission, based on a sum of power for performing the at least one PSFCH transmission being greater than a maximum transmit power of a first device ⎯ S1710

performing N PSFCH transmissions ⎯ S1720

# FIG. 18

performing channel sensing related to a CAP for a first resource, on a shared spectrum ⎯ S1810

performing a PSSCH transmission to a first device based on a first resource, based on a result of channel sensing being IDLE ⎯ S1820

receiving a first PSFCH transmission related to a PSSCH transmission based on a PSFCH resource ⎯ S1830

# FIG. 19

# FIG. 20

EP 4 642 110 A1

# FIG. 21

1000(102/106, 202/206)

codewords

| 1010 | 1020 | 1030 | layers | 1040 | 1050 | 1060 | antenna ports |

Scrambler → Modulator → Layer Mapper → Precoder → Resource Mapper → Signal Generator

Scrambler → Modulator → Layer Mapper → Precoder → Resource Mapper → Signal Generator

1010   1020   1050   1060

# FIG. 22

Device (100,200)

| Communication unit (110)<br>(e.g., 5G communication unit) | Control unit (120)<br>(e.g., processor(s)) |
|---|---|
| Communication circuit (112)<br>(e.g., processor(s), memory(s)) | Memory unit (130)<br>(e.g., RAM, storage) |
| Transceiver(s) (114)<br>(e.g., RF unit(s), antenna(s)) | Additional components (140)<br>(e.g., power unit/battery, I/O unit,<br>driving unit, computing unit) |

# FIG. 23

100

140a

Power supply unit

108

110

Communication unit

120

Control unit

130

Memory unit

140c

I/O unit

Display

140d

Interface unit

140b

# FIG. 24

## INTERNATIONAL SEARCH REPORT

| International application No. |
| --- |
| **PCT/KR2023/021487** |

| A. | CLASSIFICATION OF SUBJECT MATTER |
| --- | --- |

**H04W 52/38**(2009.01)i; **H04W 52/32**(2009.01)i; **H04L 5/00**(2006.01)i; **H04L 1/18**(2006.01)i; **H04W 72/25**(2023.01)i; **H04W 92/18**(2009.01)i; **H04W 52/36**(2009.01)i; **H04W 72/04**(2009.01)i

According to International Patent Classification (IPC) or to both national classification and IPC

| B. | FIELDS SEARCHED |
| --- | --- |

Minimum documentation searched (classification system followed by classification symbols)

H04W 52/38(2009.01); H04L 1/16(2006.01); H04L 1/18(2006.01); H04L 27/26(2006.01); H04W 28/00(2009.01); H04W 52/02(2009.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전력 (power), PSFCH (physical sidelink feedback channel), 우선 순위 (priority), 인터레이스 (interlace), PRB (physical resource block)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | WO 2021-215829 A1 (LG ELECTRONICS INC.) 28 October 2021 (2021-10-28)<br>See paragraphs [0198]-[0265]. | 1-20 |
| A | US 2022-0272690 A1 (QUALCOMM INCORPORATED) 25 August 2022 (2022-08-25)<br>See paragraphs [0066]-[0142]. | 1-20 |
| A | WO 2022-226802 A1 (APPLE INC.) 03 November 2022 (2022-11-03)<br>See paragraphs [0053]-[0101]. | 1-20 |
| A | US 2021-0204217 A1 (QUALCOMM INCORPORATED) 01 July 2021 (2021-07-01)<br>See claims 1-13. | 1-20 |
| A | SAMSUNG. On Inter-UE Coordination for Mode2 Enhancements. R1-2200211, 3GPP TSG RAN WG1 #107bis-e, e-Meeting. 11 January 2022.<br>See pages 1-15. | 1-20 |

☐ Further documents are listed in the continuation of Box C.　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **25 March 2024** | **25 March 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/021487**

| Patent document cited in search report | | | Publication date (day/month/year) | Patent family member(s) | | | Publication date (day/month/year) |
|---|---|---|---|---|---|---|---|
| WO | 2021-215829 | A1 | 28 October 2021 | CN | 115152173 | A | 04 October 2022 |
| | | | | EP | 4089945 | A1 | 16 November 2022 |
| | | | | JP | 2023-516997 | A | 21 April 2023 |
| | | | | KR | 10-2023-0002283 | A | 05 January 2023 |
| | | | | US | 2022-0232575 | A1 | 21 July 2022 |
| US | 2022-0272690 | A1 | 25 August 2022 | CN | 116868526 | A | 10 October 2023 |
| | | | | US | 11683805 | B2 | 20 June 2023 |
| | | | | WO | 2022-177672 | A1 | 25 August 2022 |
| WO | 2022-226802 | A1 | 03 November 2022 | CN | 115529855 | A | 27 December 2022 |
| | | | | EP | 4101113 | A1 | 14 December 2022 |
| | | | | US | 2023-0269712 | A1 | 24 August 2023 |
| US | 2021-0204217 | A1 | 01 July 2021 | BR | 112022012013 | A2 | 30 August 2022 |
| | | | | CN | 114902757 | A | 12 August 2022 |
| | | | | EP | 4082267 | A1 | 02 November 2022 |
| | | | | KR | 10-2022-0119377 | A | 29 August 2022 |
| | | | | TW | 202137800 | A | 01 October 2021 |
| | | | | US | 11510147 | B2 | 22 November 2022 |
| | | | | WO | 2021-134092 | A1 | 01 July 2021 |

Form PCT/ISA/210 (patent family annex) (July 2022)